(19) Europäisches Patentamt
European Patent Office
Office européen des brevets

(11) EP 4 660 273 A1

(12) EUROPEAN PATENT APPLICATION
published in accordance with Art. 153(4) EPC

(43) Date of publication:
**10.12.2025 Bulletin 2025/50**

(21) Application number: **24750367.5**

(22) Date of filing: **31.01.2024**

(51) International Patent Classification (IPC):
***C09J 201/00** (2006.01)* ***C09J 9/00** (2006.01)*
***C09J 11/04** (2006.01)* ***C09J 163/00** (2006.01)*
***H01M 10/613** (2014.01)* ***H01M 10/653** (2014.01)*

(52) Cooperative Patent Classification (CPC):
**C08G 59/20; C08G 59/40; C08G 59/50; C08K 3/013; C08K 3/20; C08K 3/22; C08K 5/103; C08K 5/17; C08L 63/00; C09J 9/00; C09J 11/04; C09J 11/06; C09J 163/00; C09J 171/02; C09J 175/04;** (Cont.)

(86) International application number:
**PCT/JP2024/003184**

(87) International publication number:
**WO 2024/162418 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.01.2023 JP 2023013583**
**31.01.2023 JP 2023013584**
**08.03.2023 JP 2023035923**
**31.03.2023 JP 2023059573**
**31.03.2023 JP 2023059531**
**29.09.2023 JP 2023170651**

(71) Applicant: **Sekisui Chemical Co., Ltd.**
**Osaka-shi, Osaka 530-8565 (JP)**

(72) Inventors:
- **FURUKAWA, Atsushi**
**Mishima-gun, Osaka 618-0021 (JP)**
- **IWAMOTO, Tatsuya**
**Mishima-gun, Osaka 618-0021 (JP)**
- **KOBAYASHI, Yusuke**
**Mishima-gun, Osaka 618-0021 (JP)**
- **YOSHIOKA, Tetsuro**
**Mishima-gun, Osaka 618-0021 (JP)**

(74) Representative: **Ter Meer Steinmeister & Partner Patentanwälte mbB**
**Nymphenburger Straße 4**
**80335 München (DE)**

# (54) CURABLE THERMALLY CONDUCTIVE ADHESIVE AND THERMALLY CONDUCTIVE MEMBER

(57) A curable thermally conductive adhesive comprising a curable binder and a thermally conductive filler, wherein a cured product of the curable thermally conductive adhesive has a mass loss rate of 1.5% or less after a thermal cycling test wherein a cycle consisting of 3 hours at -40°C and 3 hours at 80°C is repeated 20 times, and an elastic modulus at 80°C of $1.2 \times 10^8$ Pa or less.

EP 4 660 273 A1

Processed by Luminess, 75001 PARIS (FR)

(Cont. next page)

(52) Cooperative Patent Classification (CPC): (Cont.)
**C09J 201/00; C09J 201/10; C09K 5/14;**
**H01M 10/60; H01M 10/613; H01M 10/625;**
**H01M 10/647; H01M 10/65; H01M 10/651;**
**H01M 10/653; H01M 10/6554;** Y02E 60/10

## Description

### Technical Field

The present invention relates to a curable thermally conductive adhesive and a thermally conductive member for use in electronics applications such as battery assemblies.

### Background Art

Thermally conductive compositions are used by, for example, being applied between a heating element and a heat dissipating element to propagate heat produced by the heating element and dissipate it from the heat dissipating element. Thermally conductive compositions in general are curable, and are often used as cured products after being applied and then cured. Thermally conductive compositions play an important role in a large number of electronics applications, for example, battery assemblies such as lithium-ion battery (LiB) assemblies for electric vehicles (EVs), power electronics, electronic packaging, LEDs, solar cells, and electrical grids.

For example, in LiB assembly applications for EVs, it is becoming increasingly important for thermally conductive compositions before being cured to have a lowered viscosity in order to improve EV productivity as the production of EV continues to increase. This is because a lowered viscosity makes it possible to shorten the time for the application process using a dispenser and the time for the process of assembling, for example, a module case on the applied thermally conductive composition.

Also, thermally conductive compositions are required to have greater thermal conductivity, and attempts are being made to densely pack a thermally conductive filler. Moreover, for example, in LiB assemblies for EVs, thermally conductive compositions from the viewpoint of ensuring adhesion to battery cells, module cases, cooling plates, and the like may be required to have increased adhesion to various components. In addition, thermally conductive compositions are expected to be used in various temperature environments, and high reliability may be required to maintain favorable thermal conductivity and like properties even in an environment where high and low temperatures are repeatedly experienced.

For example, Patent Literature 1 discloses a low thermal resistance, reliable, thermally conductive composition with which the minimum mounting gap can be reduced and which comprises a tri- or higher functional epoxy resin having no aromatic skeleton, a bi- or lower functional liquid epoxy resin, a curing agent, a silane compound having no functional group other than an alkoxy group, and a thermally conductive filler. Therein, reliability is specifically verified by the absence of peeling in a heat shock test (thermal cycling). Also, epoxy resins having an average molecular weight (Mn) in the range of, for example, 5000 to 10000 are disclosed, and various curing agents are exemplified as well.

### Citation List

#### Patent Literature

PTL1: JP 2022-116587 A

### Summary of Invention

#### Technical Problem

As described above, thermally conductive compositions may be required to be highly reliable by being capable of securing properties such as thermal conductivity even in environments where high and low temperatures are repeatedly experienced while ensuring low viscosity, high thermal conductivity, and high adhesion. However, it is difficult for conventional thermally conductive compositions to simultaneously satisfy such required properties. For example, in Patent Document 1, the thermally conductive composition is described as being capable of achieving high reliability while ensuring high thermal conductivity, but is problematic by having poor workability because a high molecular weight epoxy resin and a high molecular weight curing agent are used and thus result in a highly viscous thermally conductive composition.

Meanwhile, in order to lower the viscosity, it is also contemplated to simply use a low molecular weight binder or add a plasticizer to lower the elastic modulus as well as viscosity. However, the mere use of a low molecular weight binder or a plasticizer is likely problematic in that volatilization occurs and thus foaming occurs on the surface of the thermally conductive composition in an environment where high and low temperatures are repeatedly experienced, thus making it difficult to ensure high reliability.

Accordingly, an object of the present invention is to provide a curable thermally conductive adhesive having low

viscosity and high reliability.

Solution to Problem

As a result of having conducted diligent research, the present inventors found that the above problem can be solved by a curable thermally conductive adhesive containing a curable binder and a thermally conductive filler, wherein the mass loss rate after a thermal cycling test and the elastic modulus at 80°C are both reduced to certain values or below, and accomplished the present invention. That is to say, the present invention provides [1] to [15] below.

[1] A curable thermally conductive adhesive comprising a curable binder and a thermally conductive filler,
a cured product of the curable thermally conductive adhesive having a mass loss rate of 1.5% or less after a thermal cycling test in which 3 hours at -40°C and 3 hours at 80°C are repeated 20 times, and an elastic modulus at 80°C of $1.2\times10^8$ Pa or less.
[2] The curable thermally conductive adhesive according to [1], wherein the elastic modulus is $3.0\times10^6$ Pa or more.
[3] The curable thermally conductive adhesive according to [1] or [2], having a viscosity of 300 Pa·s or less at a shear rate of 3.16 (1/s) at 25°C measured with a rheometer.
[4] The curable thermally conductive adhesive according to any one of [1] to [3], wherein the binder comprises an epoxy group-containing compound.
[5] The curable thermally conductive adhesive according to any one of [1] to [4], wherein the binder comprises at least one of an amine or a thiol.
[6] The curable thermally conductive adhesive according to any one of [1] to [5], wherein the binder comprises an epoxy group-containing compound and an amine.
[7] The curable thermally conductive adhesive according to [6], wherein an equivalent ratio of the number of active hydrogen atoms of amino groups contained in the amine to the number of epoxy groups in the epoxy group-containing compound [(number of amino groups)/number of epoxy groups] is 1.2 or more and 2.9 or less.
[8] The curable thermally conductive adhesive according to any one of [1] to [7], which comprising a first agent which comprises a base resin of the binder and with which a first container is filled, and a second agent which comprises a curing agent that cures by being mixed with the first agent and with which a second container is filled.
[9] The curable thermally conductive adhesive according to [8], wherein a difference between a viscosity (Pa·s) of the first agent and a viscosity (Pa·s) of the second agent is 150 Pa·s or less.
[10] The curable thermally conductive adhesive according to [8] or [9], wherein a ratio of a functional group concentration (mol/g) of the second agent to a functional group concentration (mol/g) of the first agent is 1.2 or more and 2.9 or less.
[11] A container set, which is filled with the curable thermally conductive adhesive according to any one of [8] to [10], and comprises a first container filled with the first agent and a second container filled with the second agent.
[12] A thermally conductive member comprising a polymer matrix and a thermally conductive filler, and having a mass loss rate of 1.5% or less after a thermal cycling test at - 40°C for 3 hours and at 80°C for 3 hours, and an elastic modulus at 80°C of $1.2\times10^8$ Pa or less.
[13] A thermally conductive member comprising a cured product of the curable thermally conductive adhesive according to any one of [1] to [12].
[14] A battery assembly comprising the thermally conductive member according to [12] or [13].
[15] Use of the curable thermally conductive adhesive according to any one of [1] to [10] as at least one of a gap filler between battery cells, a gap filler between a battery cell and a module housing, a gap filler between a battery module and a battery pack housing, or a gap filler between a battery cell and a battery pack housing.

Advantageous Effect of Invention

The present invention provides a curable thermally conductive adhesive having low viscosity and high reliability.

Brief Description of Drawings

[Fig. 1] Fig. 1 is a schematic diagram showing a container set according to one embodiment.
[Fig. 2] Fig. 2 is a schematic diagram showing a container set according to one embodiment.
[Fig. 3] Fig. 3 is a perspective diagram showing a representative configuration of a battery module according to the present invention.
[Fig. 4] Fig. 4 is a perspective diagram showing a representative configuration of a battery cell contained in a battery

module.

[Fig. 5] Fig. 5 is a perspective diagram showing a battery assembly having a cell-to-pack structure.

Description of Embodiments

[Curable thermally conductive adhesive]

Below, the curable thermally conductive adhesive of the present invention will now be described in detail.

The curable thermally conductive adhesive of the present invention contains a curable binder and a thermally conductive filler. In the present invention, a cured product of the curable thermally conductive adhesive has a mass loss rate of 1.5% or less after a thermal cycling test in which 3 hours at -40°C and 3 hours at 80°C are repeated 20 times, and an elastic modulus at 80°C of $1.2\times10^8$ Pa or less.

The curable thermally conductive adhesive having the above configuration is highly reliable while ensuring low viscosity, high thermal conductivity, and high adhesion. Accordingly, the cured product can maintain favorable thermal conductivity and the like without producing volatilization marks or undergoing peeling from an adherend even when a thermal cycling test is performed on the cured product. Below, the curable thermally conductive adhesive of the present invention will now be described in detail.

<Mass loss rate after thermal cycling test>

Concerning the curable thermally conductive adhesive of the present invention (hereinafter sometimes simply referred to as an "adhesive"), the cured product thereof has a mass loss rate of 1.5% or less after a thermal cycling test in which 3 hours at -40°C and 3 hours at 80°C are repeated 20 times. When the mass loss rate after a thermal cycling test exceeds 1.5%, the adhesive may, for example, the adhesive partially evaporates during the thermal cycling test, resulting in foaming and volatilization marks, and volatilization marks are also likely produced during actual use. When volatilization marks are produced, thermal conductivity is impaired, adhesion is impaired, and, also, insulating properties are impaired when the thermally conductive member has insulating properties.

The mass loss rate after the thermal cycling test is preferably 1.4% or less, more preferably 1.25% or less, and even more preferably 1.0% or less. While a lower mass loss rate after the thermal cycling test is more preferable from the viewpoint of reliability, the mass loss rate after the thermal cycling test from the viewpoint of lowering the viscosity of the adhesive before curing may be at a certain value or higher, and is preferably 0.05% or more, more preferably 0.1% or more, and even more preferably 0.2% or more.

The mass loss rate after the thermal cycling teste from the viewpoint of balancing between the low viscosity of the adhesive before curing and reliability is preferably 0.05% or more and 1.5% or less, more preferably 0.1% or more and 1.4% or less, and even more preferably 0.2% or more and 1.25% or less.

The mass loss rate after the thermal cycling test can be obtained by performing the thermal cycling test on a test sample (a cured product) that has a thickness of 1 mm and is obtained by curing the adhesive, measuring the mass loss of the test sample due to the thermal cycling test, and determining the percentage (%) of the mass loss relative to the test sample before the thermal cycling test.

The mass loss rate after the thermal cycling test can be regulated by, for example, the types and amounts of the components constituting the binder, and, for example, can be lowered by using a low-volatility component or a component that does not decompose even when heated as a binder.

<Elastic modulus>

The cured product of the adhesive of the present invention has an elastic modulus at 80°C of $1.2\times10^8$ Pa or less. When the elastic modulus at 80°C is higher than $1.2\times10^8$ Pa, the flexibility of the adhesive is impaired, and the adhesive is unlikely conformable to changes to the gap between adherends. Accordingly, peeling likely occurs during the thermal cycling test, and peeling from adherends also likely occurs during actual use. Peeling from adherends may lead to impaired heat dissipation properties and impaired strength of the adhesive as a structural member when the adhesive is used as a thermally conductive member. In addition, volatilization marks resulting from foaming are likely produced, making it impossible to increase the reliability of the adhesive.

The elastic modulus at 80°C of the cured product is preferably $1.1\times10^8$ Pa or less, more preferably $1.0\times10^8$ Pa or less, and even more preferably $0.85\times10^8$ Pa or less. The elastic modulus at 80°C the cured product, for example, from the viewpoint of ensuring adhesive strength at high temperatures may be at a certain value or higher, and is, for example, $3.0\times10^6$ Pa or more, preferably $1.0\times10^7$ Pa or more, more preferably $2.0\times10^7$ Pa or more, and even more preferably $3.0\times10^7$ Pa or more.

From the viewpoint of the conformability of the adhesive to changes to the gap between adherends and from the

viewpoint of increasing the reliability of the adhesive, the elastic modulus at 80°C of the cured product is preferably $1.0\times10^7$ Pa or more and $1.2\times10^8$ Pa or less, more preferably $2.0\times10^7$ Pa or more and $1.1\times10^8$ Pa or less, and even more preferably $3.0\times10^7$ Pa or more and $1.0\times10^8$ Pa or less.

The cured product of the adhesive of the present invention preferably has an elastic modulus at -40°C of $1.0\times10^9$ Pa or more and $5.0\times10^{11}$ Pa or less. By regulating the elastic modulus at -40°C of the cured product to the above range, reliability is readily increased, and adhesive strength at low temperatures is readily ensured. The elastic modulus at -40°C of the cured product is more preferably $5.0\times10^9$ Pa or more and $1.0\times10^{11}$ Pa or less, and even more preferably $9.0\times10^9$ Pa or more and $5.0\times10^{10}$ Pa or less.

The cured product of the adhesive of the present invention preferably has an elastic modulus at 25°C of $1.0\times10^7$ Pa or more and $1.0\times10^{11}$ Pa or less. By regulating the elastic modulus at 25°C of the cured product to the above range, reliability can be increased, and adhesive strength at ordinary temperature is readily ensured. Also, the elastic modulus at high temperatures is readily regulated to a suitable value. The elastic modulus at 25°C of the cured product is more preferably $8.0\times10^7$ Pa or more and $7.0\times10^{10}$ Pa or less, and even more preferably $3.0\times10^8$ Pa or more and $2.0\times10^{10}$ Pa or less.

The elastic modulus of the cured product of the adhesive is the storage elastic modulus determined with a dynamic viscoelasticity analyzer under the measurement conditions described in the Examples using a test sample that has a thickness of 1 mm and is obtained by curing the adhesive.

The elastic modulus of the cured product can be regulated by, for example, the types and amounts of the components constituting the binder. For example, the elastic modulus can be lowered by regulating the types and amounts of the components constituting the binder so as to reduce the crosslinking density, or using a highly flexible binder. The elastic modulus at 80°C can also be readily lowered by suitably increasing the amount of a low molecular weight curing agent for the binder.

As described above, by configuring the cured product so as to have a mass loss rate after a thermal cycling test of 1.5% or less, and an elastic modulus of the cured product at 80°C of $1.2\times10^8$ Pa or less, the present invention can provide a highly reliable curable thermally conductive adhesive. More specifically, even when the viscosity of the adhesive is lowered by using a component having a certain low viscosity, volatilization marks and peeling can be suppressed by satisfying the above parameter ranges, and thus a highly reliable curable thermally conductive adhesive can be provided.

<Glass transition temperature >

The cured product of the adhesive of the present invention preferably has a glass transition temperature of -80°C or higher and -40°C or lower. When the glass transition temperature of the cured product is at the upper limit or below, variations in elastic modulus are small within the temperature range of the thermal cycling test (-40°C to 80°C), and reliability is readily increased. When the glass transition temperature is at the lower limit or above, a large number of resin types can be employed, and design freedom is enhanced.

On the other hand, as long as the cured product of the adhesive has the above elastic modulus, the cured product may have a glass transition temperature exceeding -40°C. In this case, the glass transition temperature is preferably 15°C or higher and 55°C or lower, more preferably 20°C or higher and 48°C or lower, and even more preferably 26°C or higher and 46°C or lower. Variations in elastic modulus in the temperature range above the glass transition temperature are reduced, and reliability is readily increased. When the glass transition temperature is at the lower limit or above, adhesive strength is readily ensured at high temperatures.

The glass transition temperature of the cured product of the adhesive can be measured with the dynamic viscoelasticity analyzer described in the Examples using a test sample (a cured product) that has a thickness of 1 mm and is obtained by curing the adhesive. The glass transition temperature can be regulated by, for example, the types and amounts of the components constituting the binder.

The test sample used in the measurement of the mass loss rate, the measurement of the elastic modulus, and the measurement of the glass transition temperature described above is obtained by fully curing the adhesive, and is specifically a sample obtained when heat production resulting from the curing reaction is 0.1 mJ/mg or less under conditions at 25°C for 2 hours as determined by differential scanning calorimetry of the resulting cured product. The adhesive, for example, in the case of a two-component type, may be cured by mixing a first agent and a second agent and then leaving the mixture in a room temperature (25°C) environment for a long period of time (for example, 7 days).

<Viscosity>

The adhesive of the present invention preferably has a viscosity of 300 Pa·s or less. Viscosity is measured with a rheometer by regulating the temperature of a sample to 25°C using a Peltier plate, placing the sample on a φ25 mm parallel plate, and continuously changing the shear rate within the range of 0.0001 to 100 (1/s), and is a value at shear rate of 3.16 (1/s). A rheometer such as the "MCR-302e" rheometer manufactured by Anton Paar is used.

When measuring the viscosity of a two-component curing adhesive after mixing a first agent and a second agent, a sample is immediately placed in a rheometer after mixing the first agent and the second agent, and the viscosity is promptly measured. On the other hand, when measuring the viscosities of the first agent and the second agent before mixing, a sample is placed in a rheometer and left to stand still for 10 minutes, and the viscosity is then measured.
By regulating the viscosity of the adhesive to 300 Pa·s or less, the adhesive can be easily applied to an adherend, and workability is enhanced. In addition, narrow gaps can be readily filled with the adhesive. The viscosity is more preferably 250 Pa·s or less, and even more preferably 200 Pa·s or less. The viscosity may be, for example, 10 Pa·s or more and, from the viewpoint of packing a certain amount or more of a thermally conductive filler to prevent dripping or the like, is preferably 30 Pa·s or more, and more preferably 50 Pa·s or more.

<Adhesive strength>

Strong adhesion of the adhesive of the present invention can be ensured by increasing adhesive strength after curing. Accordingly, a higher adhesive strength of the adhesive after curing is better, and adhesive strength after curing is, for example, 1 MPa or more, preferably 2 MPa or more, more preferably 3 MPa or more, and even more preferably 3.8 MPa or more. While a higher adhesive strength of the adhesive after curing is better, an adhesive strength is practically, for example, 25 MPa or less.
Meanwhile, by regulating elongation at maximum load after curing to a certain value or above, the flexibility of the adhesive of the present invention can ensured, and reliability and the like are readily enhanced. The elongation at maximum load after curing of the adhesive of the present invention is, for example, 0.5 mm or more, preferably 0.6 mm or more, more preferably 0.7 mm or more, and even more preferably 0.75 mm or more. The elongation at maximum load is not particularly limited, and is, for example, 3 mm or less, and preferably 2 mm or less, in terms of imparting a certain level of adhesive strength.
The adhesive strength and the elongation at maximum load of the adhesive after curing can be measured by the following test method. First, two PET plates each having 25 mm × 100 mm and a thickness of 2 mm are provided. The ends of the two provided plates are then placed one on top of the other with the adhesive being interposed therebetween, and the adhesive is cured to bond the ends of the plates and give a measurement sample. The ends of the plates are bonded with the cured adhesive having 25 mm × 5 mm and a thickness of 1 mm. The maximum load when the resulting measurement sample is pulled in the longitudinal directions using a tensile tester is defined as adhesive strength, and the elongation of the cured product at maximum load is defined as elongation at maximum load. The tensile speed may be 10 mm/sec.
The curing of the adhesive may be achieved by fully curing the adhesive between the PET plates. Here, fully curing is as explained above. For example, in the case of a two-component type, the curing of the adhesive may be carried out by mixing a first agent and a second agent, applying the mixture to be disposed between the PET plates, and then leaving the mixture to stand at room temperature (25°C) for 168 hours.

<Thermal conductivity>

Concerning the adhesive of the present invention, the cured product thereof preferably has a thermal conductivity of 1.5 W/(m·K) or more, more preferably 1.7 W/(m·K) or more, and even more preferably 1.9 W/(m·K) or more. Due to the thermal conductivity of the cured product of the adhesive being at these lower limits or above, thermally conducting properties are enhanced. Accordingly, when the adhesive is used in, for example, a battery cell assembly, heat produced from battery cells can be efficiently transferred to a module housing and a battery pack via the cured product (a thermally conductive member) of the adhesive, and an excessively increased temperature of the battery cells can be suppressed. While a higher thermal conductivity is better, a practical thermal conductivity is, for example, 7.0 W/(m·K) or less.
Thermal conductivity can be measured in accordance with ASTM D 5470-06.
Specifically, the adhesive is applied in an excessive amount so as to be larger than the thickness at the time of measurement such that the measurement die that serves as a heating element is covered, then sandwiched with a heat dissipating element, and compressed with a load of 30 psi until the thickness of the adhesive becomes 1.0 mm, 1.5 mm, and 2.0 mm, and the thermal resistances at these thicknesses are measured. The thickness can be regulated by a spacer. A graph depicting these three thermal resistance values is created, with the horizontal axis representing thickness and the vertical axis representing thermal resistance, and the least squares method is used to obtain an approximate straight line for the three points. The inclination of the approximate straight line is defined as thermal conductivity.

[Binder]

The adhesive of the present invention contains a curable binder. The curable binder may be thermally curable, photo-curable, or moisture-curable, and is preferably thermally curable. The binder may be any of a one-component curable type and a two-component curable type, and is preferably a two-component curable type.

The two-component curable type is used by mixing a first agent containing a base resin and a second agent containing a curing agent, and curing is initiated by mixing the first agent and the second agent. Accordingly, in the two-component curable type, a curing agent is preferably used that cures when mixed with the base resin of the first agent. Also, a curing agent is preferable that can cure at room temperature (25°C) when mixed with the base resin of the first agent.

The binder is preferably any of a urethane-based binder, a silicone-based binder, an acryl-based binder, an epoxy-based binder, or an organic polymer having a hydrolyzable silyl group. Among these, an epoxy-based binder, a urethane-based binder, and an organic polymer having a hydrolyzable silyl group are more preferable, and an epoxy-based binder is even more preferable. By using these specific binders, the mass loss rate after a thermal cycling test and the elastic modulus at 80°C are readily regulated to the above predetermined ranges.

<Urethane-based binder>

Here, examples of the urethane-based binder include those composed of a polyol compound as a base resin and a polyisocyanate compound as a curing agent. Accordingly, in the case of a two-component curable type, the first agent may contain a polyol compound, and the second agent may contain a polyisocyanate compound. Below, the urethane-based binder will now be described in detail.

(Polyol compound)

The polyol compound used in the present invention is not particularly limited, and examples include polyester polyol, polyether polyol, polycarbonate polyol, and polymer polyol.

The polyester polyol may be a polyester polyol having an aromatic ring, or may be an aliphatic polyester polyol. Examples of the polyester polyol include a polyester polyol obtained by reacting a polycarboxylic acid with a polyol, and a caprolactone polyol such as poly-ε-caprolactone polyol obtained by ring-opening polymerization of ε-caprolactone.

Examples of the polycarboxylic acid that is a feedstock of polyester polyol include divalent carboxylic acids such as phthalic acid, terephthalic acid, isophthalic acid, 1,5-naphthalic acid, 2,6-naphthalic acid, succinic acid, glutaric acid, adipic acid, pimelic acid, suberic acid, azelaic acid, sebacic acid, decamethylene dicarboxylic acid, and dodecamethylene dicarboxylic acid.

Examples of the polyol that is a feedstock of polyester polyol include diols such as ethylene glycol, propylene glycol, 1,3-propanediol, 1,4-butanediol, neopentyl glycol, 1,5-pentanediol, 1,6-hexanediol, diethylene glycol, and cyclohexanediol.

Examples of the polyether polyol include polyalkylene glycols such as polyethylene glycol, polypropylene glycol, polytrimethylene glycol, polytetramethylene ethel glycol, polymethyltetramethylene glycol, and random copolymers or block copolymers of these alkylene glycols or derivatives thereof.

The polyether polyol may be a polyalkylene polyol obtained by ring-opening addition polymerization of an alkylene oxide (such as, ethylene oxide, propylene oxide, butylene oxide, or isobutylene oxide) to an initiator having two or more active hydrogen atoms. Specific examples of the initiator include aliphatic polyhydric alcohols, or more specifically, glycols such as ethylene glycol, propylene glycol, diethylene glycol, dipropylene glycol, 1,4-butanediol, 1,3-butanediol, 1,6-hexanediol, neopentyl glycol, cyclohexylene glycol, and cyclohexanedimethanol, triols such as trimethylolpropane and glycerin, tetrafunctional alcohols such as pentaerythritol, and higher-functional alcohols such as sucroses and sorbitols. Examples also include aliphatic amines, e.g., alkylenediamines such as ethylenediamine, propylenediamine, butylenediamine, hexamethylenediamine, and neopentyldiamine, and alkanolamines such as monoethanolamine and diethanolamine; and aromatic amines such as aniline, tolylenediamine, xylylenediamine, diphenylmethanediamine, and Mannich condensates. Moreover, it may be a bisphenol-type polyalkylene polyol obtained by addition reaction of an alkylene oxide to the active hydrogen moiety of a bisphenol-type molecular skeleton.

Examples of the polycarbonate polyol include poly(3-methyl-1,5-pentylene carbonate) diol, polypentamethylene carbonate diol, and polytetramethylene carbonate diol.

Examples of the polymer polyol include polymers obtained by graft polymerization of an ethylenically unsaturated compound such as acrylonitrile, styrene, methyl acrylate, or methacrylate to an aromatic polyol, an alicyclic polyol, an aliphatic polyol, or a polyester polyol; and hydrogenated products of polybutadiene polyol.

Examples of the aromatic polyol used in the production of the polymer polyol include bisphenol A, bisphenol F, phenol novolac, and cresol novolac. Examples of the alicyclic polyol used in the production of the polymer polyol include cyclohexanediol, methylcyclohexanediol, isophoronediol, dicyclohexylmethanediol, and dimethyldicyclohexylmethanediol. Examples of the aliphatic polyol used in the production of the polymer polyol include ethylene glycol, propylene glycol, butanediol, pentanediol, and hexanediol.

Among the above polyol compounds, a polyether polyol is preferable, and a polyalkylene glycol is more preferable. By using a polyether polyol, the value of the storage elastic modulus is readily lowered.

The average molecular weight of the polyol compound is not particularly limited, and is preferably 300 or more, more preferably 500 or more, and even more preferably 700 or more. By increasing the average molecular weight of the polyol compound, the value of the storage elastic modulus is readily lowered. The average molecular weight of the polyol compound is not particularly limited, and is, for example, 20000 or less, preferably 10000 or less, more preferably 5000 or less, and even more preferably 3500 or less.
The average molecular weight of the polyol compound can be determined by measuring the hydroxyl value (mgKOH/g) and assigning it to the following formula:

$$\text{Average molecular weight} = \text{Hydroxyl value} \times N \times 1000 / 56.11$$

N: Average number of functional groups in polyol
The hydroxyl value can be measured in accordance with JIS K 1557-1.

(Polyisocyanate compound)

Examples of the polyisocyanate compound include aromatic polyisocyanate compounds and aliphatic polyisocyanate compounds.
Examples of the aromatic polyisocyanate compounds include diphenylmethane diisocyanate, tolylene diisocyanate, and naphthalene-1,5-diisocyanate.
Examples of the aliphatic polyisocyanate compounds include hexamethylene diisocyanate, trimethylhexamethylene diisocyanate, lysine diisocyanate, norbornane diisocyanate, transcyclohexane-1,4-diisocyanate, isophorone diisocyanate, hydrogenated xylylene diisocyanate, hydrogenated diphenylmethane diisocyanate, cyclohexane diisocyanate, bis(isocyanatemethyl)cyclohexane, and dicyclohexylmethane diisocyanate.
The polyisocyanate compound may be a modified product of the above, may be a liquid modified product of diphenylmethane diisocyanate, may be polymeric MDI or the like, or may be a biuret, isocyanurate, or adduct of the above polyisocyanate compound.
The content of the polyol compound and the content of the polyisocyanate compound in the adhesive, in terms of the molar ratio of isocyanate groups (NCO) in the polyisocyanate compound to hydroxyl groups (OH) in the polyol compound ([NCO]/[OH]), may be in the range of, for example, 1.0 or more and 4.0 or less, and is preferably 1.5 or more and 3.0 or less. The molar ratio ([NCO]/[OH]) is also referred to as an equivalent ratio.

<Silicone-based binder>

The silicone-based binder may be any of a condensation-curable silicone resin and an addition reaction-curable silicone resin, and is preferably an addition reaction-curable silicone resin. The addition reaction curable silicone resin is preferably composed of a silicone resin that constitutes a base resin and a curing agent that cures the base resin, and, for example, in the case of an addition reaction curable silicone resin, organopolysiloxane having an alkenyl group is preferably used as a base resin, and organohydrogenpolysiloxane is preferably used as a curing agent.

<Organic polymer having hydrolyzable silyl group>

The organic polymer having a hydrolyzable silyl group has a hydrolyzable silyl group, and can be hydrolyzed by water such as moisture to form silanol groups, and then silanol groups can undergo condensation polymerization with each other or with the hydrolyzable silyl group to form a siloxane bond. Accordingly, the organic polymer forms a crosslinked structure and cures, and thereby a rubber-like elastic body is obtained. The silanol group means a hydroxy group directly bonded to a silicon atom (Si-OH).
The hydrolyzable silyl group is a group in which 1 to 3 hydrolyzable groups are bonded to a silicon atom. The hydrolyzable group of the hydrolyzable silyl group is not particularly limited, and examples include a hydrogen atom, a halogen atom, an alkoxy group, an acyloxy group, a ketoximate group, an amino group, an amide group, an acid amide group, an aminooxy group, a mercapto group, and an alkenyloxy group.
In particular, the hydrolyzable silyl group is preferably an alkoxysilyl group because of its moderate hydrolysis reaction. Examples of the alkoxysilyl group include trialkoxysilyl groups such as a trimethoxysilyl group, a triethoxysilyl group, a triisopropoxysilyl group, and a triphenoxysilyl group; dialkoxysilyl groups such as a dimethoxymethylsilyl group and a diethoxymethylsilyl group; and monoalkoxysilyl groups such as a methoxydimethylsilyl group and an ethoxydimethylsilyl group. In particular, a dialkoxysilyl group is more preferable, and a dimethoxymethylsilyl group is particularly preferable.
The main chain of the organic polymer having a hydrolyzable silyl group may be linear or branched, and is

preferably linear. That is to say, the organic polymer having a hydrolyzable silyl group of the present invention preferably has a hydrolyzable silyl group at the terminal of the linear main chain.

When the organic polymer having a hydrolyzable silyl group at the terminal is used, the cured product readily stretches, and conformability is enhanced.

The terminal silylation rate of the organic polymer having a hydrolyzable silyl group is preferably 70% or more, more preferably 80% or more, and even more preferably 90% or more. When the terminal silylation rate is at a certain level or higher, the curability and the stretchability of the battery curable adhesive are readily regulated to suitable levels. The terminal silylation rate means the ratio of silylated terminals to all terminals of the organic polymer having a hydrolyzable silyl group.

The terminal silylation rate is not particularly limited, is, for example, 100% or less, and can practically be 99% or less.

The terminal silylation rate of the organic polymer having a hydrolyzable silyl group can be determined by $^1$H-NMR.

The average number of hydrolyzable silyl groups per molecule of the organic polymer having a hydrolyzable silyl group is preferably 1 to 3. When the number of hydrolyzable silyl groups in the polymer is within this range, the curability and the stretchability of the adhesive are enhanced.

The average number of hydrolyzable silyl groups per molecule of the organic polymer having a hydrolyzable silyl group can be calculated based on the concentration of hydrolyzable silyl groups in the organic polymer determined by $^1$H-NMR and the number average molecular weight of the polymer determined by GPC.

The method for introducing a hydrolyzable silyl group into an organic polymer is not particularly limited, and examples include (1) a method in which hydrosilane having a hydrolyzable silyl group is caused to act on, and thus hydrosilylate, an organic polymer modified with an unsaturated group within the molecule, (2) a method in which a compound having a mercapto group and a hydrolyzable silyl group is reacted with an organic polymer modified with an unsaturated group within the molecule, and (3) a method in which an organic polymer having a functional group within the molecule is reacted with a compound having a hydrolyzable silyl group and a functional group reactive to the aforementioned functional group. Specifically, a reaction between an isocyanate group and a hydroxyl group, a reaction between an isocyanate group and an amino group, a reaction between an isocyanate group and a mercapto group, or the like can be used.

The organic polymer of the organic polymer having a hydrolyzable silyl group is not particularly limited, and examples include polyalkylene oxides such as polyethylene oxide, polypropylene oxide, polybutylene oxide, polytetramethylene oxide, polyethylene oxide-polypropylene oxide copolymers, and polypropylene oxide-polybutylene oxide copolymers; saturated hydrocarbon-based polymers; polychloroprene; polyisoprene; copolymers of isoprene or butadiene with acrylonitrile and/or styrene; polybutadiene; copolymers of isoprene or butadiene with acrylonitrile and styrene; (meth)acrylate-based polymers obtained by radical polymerization of monomers such as ethyl (meth)acrylate and butyl (meth)acrylate; vinyl-based polymers obtained by radical polymerization of monomers such as vinyl acetate, acrylonitrile, and styrene; graft polymers obtained by polymerizing a vinyl monomer in the above polymers; polysulfide-based polymers; polyamide-based polymers such as nylon 6 obtained by ring-opening polymerization of ε-caprolactam, nylon 6,6 obtained by condensation polymerization of hexamethylenediamine and adipic acid, nylon 6,10 obtained by condensation polymerization of hexamethylenediamine and sebacic acid, nylon 11 obtained by condensation polymerization of ε-aminoundecanoic acid, nylon 12 obtained by ring-opening polymerization of ε-aminolaurolactam, and copolymer nylons having two or more such nylons; polycarbonate-based polymers produced by condensation polymerization of bisphenol A and carbonyl chloride; and diallyl phthalate-based polymers. Herein, (meth)acrylate means methacrylate or acrylate.

Among these organic polymers, polyalkylene oxide is preferable from the viewpoint of regulating shear adhesive strength and elongation at maximum stress after curing to the desired ranges. That is to say, the organic polymer having a hydrolyzable silyl group is preferably a polyalkylene oxide having a hydrolyzable silyl group. In particular, the polyalkylene oxide is especially preferably polypropylene oxide.

The number average molecular weight (Mn) of the organic polymer containing a hydrolyzable silyl group is preferably 1000 to 70000, more preferably 1000 to 40000, even more preferably 1500 to 30000, even more preferably 2000 to 30000, even more preferably 4000 to 30000, and even more preferably 4000 to 20000. When the number average molecular weight of the organic polymer containing a hydrolyzable silyl group is at these upper limits or below, the viscosity of the resulting adhesive can be lowered. When the number average molecular weight of the organic polymer containing a hydrolyzable silyl group at these lower limits or above, the cured product of the adhesive unlikely becomes brittle, and the hardness and the stretchability of the cured product are enhanced.

When the adhesive contains multiple kinds of organic polymers containing a hydrolyzable silyl group, the number average molecular weight (Mn) means the overall number average molecular weight (Mn) thereof.

Herein, the number average molecular weight of the organic polymer having a hydrolyzable silyl group means a value in terms of polystyrene measured by GPC (gel permeation chromatography). In the measurement by GPC, for

example, "ACQUITY APC system" manufactured by Waters and Shodex KF604 manufactured by Tosoh Corporation as a GPC column can be used, and measurement can be performed using tetrahydrofuran as a solvent at a column temperature of 40°C at a flow rate of 0.3 ml/min.

The polymer having a hydrolyzable silyl group may be a commercially available product. Examples of polyalkylene oxide-based polymers in which polypropylene oxide is the main chain skeleton, and a dimethoxysilyl group is at the terminal of the main chain skeleton, include those having product names "Exestar A2410" and "Exestar S4530" manufactured by Asahi Glass Co., Ltd., and product names "S203", "SAT350", and "SAX010" manufactured by Kaneka Corporation.

<Acryl-based binder>

The acryl-based binder is a component that constitutes an acryl-based polymer by being cured, and examples include various acryl-based compounds such as alkyl (meth)acrylate, hydroxyalkyl (meth)acrylate, (meth)acrylic acid, (meth)acrylamide, and urethane (meth)acrylate. Also, the acryl-based binder may contain a vinyl monomer that is copolymerizable with the acryl-based compounds. Moreover, the acryl-based binder may be a polymer of an acryl-based compound at least a part thereof, or a copolymer of an acryl-based compound and a vinyl monomer. The acryl-based binder may be a monofunctional acrylate compound, or may be a polyfunctional acrylate compound.

<Epoxy-based binder>

The epoxy-based binder may be composed of an epoxy group-containing compound as a base resin and a curing agent. Below, a case where an epoxy-based binder is used as the binder will now be described in detail.

(Epoxy group-containing compound)

As described above, when the binder is an epoxy-based binder, the binder preferably contains an epoxy group-containing compound. By using the epoxy group-containing compound, the adhesion of the adhesive is readily increased, and the elastic modulus of the cured product of the adhesive is readily regulated to the predetermined range. The epoxy group-containing compound may be a polyfunctional epoxy group-containing compound or a monofunctional epoxy group-containing compound.

The adhesive of the present invention preferably contains at least a polyfunctional epoxy group-containing compound. Due to the polyfunctional epoxy group-containing compound contained in the adhesive, adhesive strength is readily increased.

More preferably, the adhesive further contains a monofunctional epoxy group-containing compound in addition to the polyfunctional epoxy group-containing compound. Due to the monofunctional epoxy group-containing compound further contained in the adhesive, an excessive crosslinking density after curing is prevented, and the elastic modulus after curing is readily lowered. Also, due to the monofunctional epoxy group-containing compound used, the viscosity of the adhesive before curing can be readily lowered.

The polyfunctional epoxy group-containing compound may be a bifunctional or trifunctional epoxy group-containing compound, and a bifunctional epoxy group-containing compound is preferably used. Specific examples of the polyfunctional epoxy group-containing compound include epoxy resins having an aromatic skeleton, such as phenol novolac epoxy resins, resorcinol epoxy resins, epoxy resins having a bisphenol skeleton, epoxy resins having a naphthalene skeleton, epoxy resins having a fluorene skeleton, epoxy resins having a biphenyl skeleton, epoxy resins having a bi(glycidyloxyphenyl)methane skeleton, epoxy resins having a xanthene skeleton, epoxy resins having an anthracene skeleton, and epoxy resins having a pyrene skeleton.

Also, examples include epoxy resins having an alicyclic skeleton, such as epoxy resins having a dicyclopentadiene skeleton and epoxy resins having an adamantane skeleton.

Examples further include aliphatic epoxy resins such as butanediol diglycidyl ether, neopentyl glycol diglycidyl ether, and trimethylolpropane polyglycidyl ether.

In addition, hydrogenated or modified products of the epoxy resins exemplified above can also be used as epoxy resins.

Examples of the epoxy resins having a bisphenol skeleton include epoxy resins having a bisphenol A, bisphenol F, or bisphenol S type bisphenol skeleton.

Examples of the resorcinol epoxy resins include resorcinol diglycidyl ether.

Examples of the epoxy resins having a naphthalene skeleton include 1,2-diglycidylnaphthalene, 1,5-diglycidylnaphthalene, 1,6-diglycidylnaphthalene, 1,7-diglycidylnaphthalene, 2,7-diglycidylnaphthalene, triglycidylnaphthalene, and 1,2,5,6-tetraglycidylnaphthalene.

Examples of the epoxy resins having a fluorene skeleton include 9,9-bis(4-glycidyloxyphenyl)fluorene, 9,9-bis(4-glycidyloxy-3-methylphenyl)fluorene, 9,9-bis(4-glycidyloxy-3-chlorophenyl)fluorene, 9,9-bis(4-glycidyloxy-3-bromophenyl)fluorene, 9,9-bis(4-glycidyloxy-3-fluorophenyl)fluorene, 9,9-bis(4-glycidyloxy-3-methoxyphenyl)fluorene, 9,9-bis(4-glycidyloxy-3,5-dimethylphenyl)fluorene, 9,9-bis(4-glycidyloxy-3,5-dichlorophenyl)fluorene, and 9,9-bis(4-glycidyloxy-3,5-dibromophenyl)fluorene.

Examples of the epoxy resins having a biphenyl skeleton include 4,4'-diglycidylbiphenyl and 4,4'-diglycidyl-3,3',5,5'-tetramethylbiphenyl. Examples of the epoxy resins having a bi(glycidyloxyphenyl)methane skeleton include 1,1'-bi(2,7-glycidyloxynaphthyl)methane, 1,8'-bi(2,7-glycidyloxynaphthyl)methane, 1,1'-bi(3,7-glycidyloxynaphthyl) methane, 1,8'-bi(3,7-glycidyloxynaphthyl)methane, 1,1'-bi(3,5-glycidyloxynaphthyl)methane, 1,8'-bi(3,5-glycidyloxynaphthyl)methane, 1,2'-bi(2,7-glycidyloxynaphthyl)methane, 1,2'-bi(3,7-glycidyloxynaphthyl)methane, and 1,2'-bi(3,5-glycidyloxynaphthyl)methane.

Examples of the epoxy resins having a xanthene skeleton include 1,3,4,5,6,8-hexamethyl-2,7-bis-glycidylmethoxy-9-phenyl-9H-xanthene. Examples of the epoxy resins having an anthracene skeleton include those having one or more anthracene skeletons and two or more epoxy groups or glycidyl groups per molecule.

Examples of the epoxy resins having a pyrene skeleton includes those having one or more pyrene skeletons and two or more epoxy groups or glycidyl groups per molecule.

Examples of the epoxy resins having a dicyclopentadiene skeleton include dicyclopentadiene dioxide and phenol novolac epoxy resins having a dicyclopentadiene skeleton. Examples of the epoxy resins having an adamantane skeleton include 1,3-bis(4-glycidyloxyphenyl)adamantane and 2,2-bis(4-glycidyloxyphenyl)adamantane.

Among the above bifunctional epoxy group-containing compounds, from the viewpoint of enhancing adhesive strength and reliability, epoxy resins having an aromatic skeleton are preferable and, in particular, bisphenol-type epoxy resins that are epoxy resins having a bisphenol skeleton are preferable.

One bifunctional epoxy group-containing compound may be used singly, or two or more may be used in combination.

Examples of the monofunctional epoxy group-containing compound include phenyl-based glycidyl ethers such as phenyl glycidyl ether and alkylphenyl glycidyl ethers represented by p-tert-butylphenyl glycidyl ether, cresyl glycidyl ether, and nonylphenyl glycidyl ether, and monofunctional epoxy group-containing compounds having an aromatic ring such as 1-glycidylnaphthalene and 2-glycidylnaphthalene. Examples of the monofunctional epoxy group-containing compound also include aliphatic monofunctional epoxy group-containing compounds, and specific examples include glycidyl ethers of aliphatic alcohols, such as butyl glycidyl ether and lauryl glycidyl ether.

From the viewpoint of enhancing adhesive strength and reliability, the monofunctional epoxy group-containing compound preferably has an aromatic ring, and, in particular, a phenyl-based glycidyl ether is preferable.

One monofunctional epoxy group-containing compound may be used singly, or two or more may be used in combination.

An epoxy group-containing compound having a low molecular weight is preferably used, and by using an epoxy group-containing compound having a low molecular weight, the viscosity of the adhesive can be lowered, and also the thermally conductive filler can be highly packed. From such a viewpoint, an epoxy group-containing compound having a molecular weight of, for example, 1000 or less may be used. There is no particular limitation to the lower limit of the molecular weight of the epoxy group-containing compound, and the lower limit is, for example, 100 or more.

Here, the molecular weight of the polyfunctional epoxy group-containing compound is preferably 1000 or less, more preferably 750 or less, and even more preferably 500 or less, and is preferably 200 or more, more preferably 250 or more, and even more preferably 280 or more.

The molecular weight of the monofunctional epoxy group-containing compound is preferably 500 or less, more preferably 300 or less, and even more preferably 200 or less, and is preferably 100 or more, more preferably 125 or more, and even more preferably 140 or more.

The epoxy equivalent of the epoxy group-containing compound is preferably 500 g/eq or less, more preferably 375 g/eq or less, and even more preferably 250 g/eq or less, and is preferably 100 g/eq or more, more preferably 125 g/eq or more, and even more preferably 140 g/eq or less.

The epoxy group-containing compound is preferably liquid at ordinary temperature (25°C). From the viewpoint of lowering the viscosity, a lower viscosity of the epoxy group-containing compound at 25°C is more preferable, and the viscosity may be, for example, 50 Pa·s or less and is preferably 10 Pa·s or less. The viscosity of the epoxy-group containing compound at 25°C is not particularly limited, and may be, for example, 0.5 mPa·s or more, or may be 1 mPa·s or more.

The viscosity of the polyfunctional epoxy group-containing compound at 25°C may be, for example, 50 Pa·s or less, is preferably 10 Pa·s or less, and may be 1 mPa·s or more, and practically the viscosity is preferably 10 mPa·s or more and more preferably 100 mPa·s or more.

On the other hand, the viscosity of the monofunctional epoxy group-containing compound at 25°C may be, for example, 10 Pa·s or less, preferably 1 Pa·s or less, and more preferably 100 mPa·s or less, and may be, for example, 0.5 mPa·s or more, 1 mPa·s or more, and 3 mPa·s or more. When the binder contains both a polyfunctional epoxy group-containing compound and a monofunctional epoxy group-containing compound, the viscosity of the monofunctional epoxy

group-containing compound is preferably lower than that of the polyfunctional epoxy group-containing compound.

The viscosities of the epoxy group-containing compound and the curing agent, which will be described below, can be measured with a rheometer (e.g., the "MCR-302e" rheometer manufactured by Anton Paar) by regulating the temperature of a sample to 25°C using a Peltier plate, using a φ50 mm cone plate having an angle of 1°, and continuously changing the shear rate in the range of 10 to 100 (1/sec). The viscosity value is a value at a shear rate of 10 (1/s).

(Curing agent)

The binder may contain a curing agent that cures the base resin, and specifically the binder preferably contains at least one of an amine or a thiol. At least one of an amine or a thiol may be used when the binder contains an epoxy group-containing compound. Containing an amine or a thiol as a curing agent, the binder is readily regulated to a practical curing speed at room temperature. Also, the adhesion of the adhesive is readily increased.

The amine may be a polyamine such as a diamine or a triamine or may be a monoamine, and is preferably a polyamine such as a diamine or a triamine. Specific examples of the amine include polyoxyalkylene amines such as polyoxyethylene diamine, poly(oxyethylene/oxypropylene) diamine, polyoxypropylene diamine, poly(oxybutylene/oxypropylene) diamine, polyethylene glycol bis(propylamine), trimethylolpropane poly(oxypropylene) triamine, glyceryl poly(oxypropylene) triamine, and methoxypoly(oxyethylene/oxypropylene)-2-propylamine; aromatic ring-containing amines such as m-phenylenediamine, p-phenylenediamine, m-xylylenediamine, p-xylylenediamine, tolylene-2,4-diamine, tolylene-2,6-diamine, mesitylene-2,4-diamine, mesitylene-2,6-diamine, 3,5-diethyltolylene-2,4-diamine, 3,5-diethyltolylene-2,6-diamine, biphenylenediamine, 4,4-diaminodiphenylmethane, 2,5-naphthylenediamine, 2,6-naphthylenediamine, a reaction product of m-xylylenediamine and styrene, and phenalkamine; aliphatic amines such as 1,6-hexanediamine, 1,8-octanediamine, 1,9-nonanediamine, 1,10-decanediamine, 1,11-undecanediamine, 1,12-dodecanediamine, 1,14-tetradecanediamine, 1,16-hexadecanediamine, 1,18-octadecanediamine, 1,20-eicosanediamine, 2-methyl-1,8-octanediamine, 2-methyl-1,9-nonanediamine, and 2,7-dimethyl-1,8-octanediamine; alicyclic amines such as 1,3-bis(aminomethyl)cyclohexane, 1,4-bis(aminomethyl)cyclohexane, cyclohexanediamine, methylcyclohexanediamine, and isophoronediamine; and polyamideamines.

Examples of polyamidoamines include those obtained by reacting aliphatic dicarboxylic acids such as succinic acid, glutaric acid, adipic acid, pimelic acid, suberic acid or azelaic acid, or carboxylic acid compounds such as fatty acids or dimer acids, with aliphatic polyamines or polyamines having a polyoxyalkylene chain.

Examples of the thiol include polythiols such as dithiols and trithiols. Specific examples of the thiol include esters of polyols and mercapto organic acids, such as pentaerythritol tetrakis(3-mercaptobutyrate), 1,4-bis(3-mercaptobutyryloxy)butane, and trimethylolpropane tris(3-mercaptobutyrate); aliphatic thiols such as alkanedithiols; and aromatic ring-containing thiols such as xylylenedithiol.

An amine and a thiol having a high molecular weight are preferably used. By using an amine and a thiol having a high molecular weight, an unreacted amine and thiol can be prevented from volatilizing during a thermal cycling test, and the mass loss rate after the thermal cycling test can be lowered. Accordingly, production of volatilization marks can be prevented even when a thermal cycling test is performed on the cured product, and reliability is readily increased.

Specifically, as for the high molecular weight amine and thiol, those having a molecular weight of 350 or more, preferably 380 or more, and more preferably 400 or more may be used, and the upper limit of the molecular weight of the amine and the thiol is not particularly limited, and is, for example, 1000 or less, preferably 800 or less, and more preferably 700 or less.

The high molecular weight amine and thiol may also have a certain level of or higher viscosity, and, specifically, the viscosity at 25°C is preferably 1 Pa·s or more, more preferably 3 Pa·s or more, and even more preferably 5 Pa·s or more. The upper limit is not particularly limited and, from the viewpoint of lowering the viscosity of the adhesive, is, for example, 50 Pa·s or less, preferably 30 Pa·s or less, and more preferably 20 Pa·s or less.

As for the high molecular weight amine and thiol, specifically, at least any of polyoxyalkyleneamines, polyamidoamines, and esterification products of polyols and mercapto organic acids is preferable among the above, and, in particular, polyoxyalkyleneamines are more preferable, and, especially, trimethylolpropane poly(oxypropylene)triamine and methoxypoly(oxyethylene/oxypropylene)-2-propylamine are even more preferable.

When using a high molecular weight amine and thiol, a low molecular weight amine and thiol are also preferably used in combination. By using amines or thiols having different molecular weights, the epoxy group-containing compound is cured in various curing modes, and even when a low molecular weight component is used, unreacted components are unlikely produced. For example, while a monofunctional epoxy group-containing compound having a relatively low molecular weight suitably reacts with a low molecular weight, fast-curing amine or thiol, a polyfunctional epoxy group-containing compound having a relatively high molecular weight suitably reacts with a high molecular weight, slow-curing amine or thiol, and thus the curing reaction suitably proceeds.

The molecular weights of the low molecular weight amine and thiol are lower than those of the high molecular weight amine and thiol. Specifically, those having a molecular weight of less than 350, more preferably 300 or less, and

even more preferably 270 or less may be used. The lower limit of the molecular weights of the low molecular weight amine and thiol is not particularly limited, and is, for example, 100 or more, preferably 120 or more, and more preferably 130 or more.

Concerning the use of the low molecular weight amine and thiol in combination with the high molecular weight amine and thiol, by regulating the amounts of the low molecular weight amine and thiol, the elastic modulus at 80°C can also be suitably regulated, and adhesive strength and the like can be suitably regulated as well.

The low molecular weight amine and thiol may also have a certain or lower viscosity value, and, specifically, the viscosity at 25°C is preferably less than 1 Pa·s, more preferably 500 mPa·s or less, and even more preferably 100 mPa·s or less. The lower limit is not particularly limited and, from the viewpoint of lowering the viscosity of the adhesive, may be, for example, 1 mPa·s or more, or may be 3 mPa·s or more.

The molecular weights of amine, thiol, and the above epoxy group-containing compound can be measured with, for example, a mass spectrometer (GC-MS or LC-MS).

Concerning the low molecular weight amine and thiol, specifically, aromatic ring-containing amines are preferable among the above, and, in particular, m-xylylenediamine and a reaction product of m-xylylenediamine and styrene are preferable.

The low molecular weight amine and thiol may be, for example, 55% by mass or less, preferably 50% by mass or less, and more preferably 35% by mass or less, based on all amines and thiols contained in the adhesive. By regulating the low molecular weight amine and thiol to a certain amount or lower, the mass loss rate after a thermal cycling test is readily suppressed. Also, adhesive strength and the like are readily increased.

The low molecular weight amine and thiol may be 0% by mass or more, and is preferably 5% by mass or more, more preferably 10% by mass or more, and even more preferably 15% by mass or more, based on all amines and thiols content in the adhesive. By regulating the low molecular weight amine and thiol to a certain amount or lower, the mass loss rate after a thermal cycling test is readily suppressed. Also, adhesive strength and the like are readily increased.

The active hydrogen equivalent of the amine and the thiol contained in the adhesive is not particularly limited, and is, for example, 15 g/eq or more, preferably 25 g/eq or more, and more preferably 30 g/eq or more, and is, for example, 250 g/eq or less, preferably 200 g/eq or less, and more preferably 150 g/eq or less.

In the present invention, when an epoxy-based binder is used, a polyfunctional acrylate compound may be further contained as a base resin in addition to the epoxy group-containing compound. That is to say, the binder may be composed of an epoxy group-containing compound as a base resin and a curing agent represented by an amine, or may be composed of an epoxy group-containing compound and a polyfunctional acrylate compound as base resins and a curing agent represented by an amine.

The polyfunctional acrylate compound used in combination with the epoxy group-containing compound will now be described below.

(Polyfunctional acrylate compound)

The polyfunctional acrylate compound is a compound having a number of functional groups (that is, number of (meth)acryloyl groups) of 2 or more. The polyfunctional acrylate compound promptly reacts with the above curing agent or, in particular, an amine, and a certain level of adhesion is imparted at the initial stage of curing.

A polyfunctional (meth)acrylate is preferably used as the polyfunctional acrylate compound, and an ester of a polyfunctional polyol and a (meth)acrylic acid is more preferably used.

Herein, the term "(meth)acryloyl group" means any of an acryloyl group and a methacryloyl group, the term "(meth)acrylate" means any of an acrylate and a methacrylate, and the same applies to other similar terms.

Examples of bifunctional acrylate compounds among polyfunctional acrylate compounds include 1,3-butanediol di(meth)acrylate, 1,4-butanediol di(meth)acrylate, 1,6-hexanediol di(meth)acrylate, 1,9-nonanediol di(meth)acrylate, 1,10-decanediol di(meth)acrylate, 2-n-butyl-2-ethyl-1,3-propanediol di(meth)acrylate, dimethyloltricyclodecane di(meth)acrylate, ethylene glycol di(meth)acrylate, neopentyl glycol di(meth)acrylate, diethylene glycol di(meth)acrylate, tetraethylene glycol di(meth)acrylate, polyethylene glycol di(meth)acrylate, dipropylene glycol di(meth)acrylate, tripropylene glycol di(meth)acrylate, polypropylene glycol di(meth)acrylate, ethylene oxide-added bisphenol A di(meth) acrylate, propylene oxide-added bisphenol A di(meth)acrylate, ethylene oxide-added bisphenol F di(meth)acrylate, dimethylol dicyclopentadienyl di(meth)acrylate, ethylene oxide-modified isocyanuric acid di(meth)acrylate, 2-hydroxy-3-(meth)acryloyloxypropyl (meth)acrylate, carbonate diol di(meth)acrylate, polyether diol di(meth)acrylate, polyester diol di(meth)acrylate, polycaprolactone diol di(meth)acrylate, and polybutadiene diol di(meth)acrylate.

Examples of tri- or higher functional acrylate compounds among polyfunctional acrylate compounds include trimethylolpropane tri(meth)acrylate, glycerin tri(meth)acrylate, pentaerythritol tetra(meth)acrylate, pentaerythritol alkoxytetra(meth)acrylate, alkylene oxide-added trimethylolpropane tri(meth)acrylates such as ethylene oxide-added trimethylolpropane tri(meth)acrylate and propylene oxide-added trimethylolpropane tri(meth)acrylate, caprolactone-modified trimethylolpropane tri(meth)acrylate, ethylene oxide-added isocyanuric acid tri(meth)acrylate, propylene oxide-added

glycerin tri(meth)acrylate, ditrimethylolpropane tetra(meth)acrylate, alkylene oxide-added pentaerythritol tetra(meth) acrylate, dipentaerythritol penta(meth)acrylate, dipentaerythritol hexa(meth)acrylate, tripentaerythritol octa(meth)acrylate, tetrapentaerythritol deca(meth)acrylate, tripentaerythritol hepta(meth)acrylate, and tetrapentaerythritol nona(meth) acrylate.

The number of functional groups in the polyfunctional acrylate compound is preferably 3 or more, more preferably 4 or more, and even more preferably 6 or more. When the number of functional groups in the polyfunctional acrylate compound is large, adhesion at the initial stage of curing is likely increased. The upper limit of the number of functional groups in the polyfunctional acrylate compound is not particularly limited, and may be, for example, 10 or less, or may be 8 or less.

From the viewpoint of enabling the viscosity of the adhesive before curing to be lowered, the polyfunctional acrylate compound preferably has a certain or lower molecular weight. The specific molecular weight of the polyfunctional acrylate compound may be, for example, 5000 or less, and is preferably 3000 or less, more preferably 1000 or less, and even more preferably 700 or less. The polyfunctional acrylate compound having a molecular weight of, for example, 150 or more, preferably 200 or more, more preferably 250 or more, and even more preferably 450 or more may be used. By regulating the molecular weight of the polyfunctional acrylate compound to a certain value or higher, an unnecessarily high crosslinking density can be prevented, and elongation and adhesion are readily enhanced.

From the viewpoint of readily lowering the viscosity of the adhesive before curing, the polyfunctional acrylate compound is preferably liquid at ordinary temperature (25°C).

The functional group equivalent of the polyfunctional acrylate compound is not particularly limited, and is preferably 500 g/eq or less, more preferably 300 g/eq or less, and even more preferably 150 g/eq or less, and is preferably 75 g/eq or more, more preferably 80 g/eq or more, and even more preferably 85 g/eq or more.

In the adhesive, the ratio of the number of functional groups in the polyfunctional acrylate compound to the number of functional groups in the epoxy group-containing compound may be about 0.1 or more and 1.5 or less, and is preferably 0.2 or more and 1.2 or less, more preferably 0.3 or more and 1.0 or less, and even more preferably 0.4 or more and 0.85 or less.

The content of the polyfunctional acrylate compound is, for example, 10% by mass or less, and preferably 8% by mass or less, based on the total amount of the thermally conductive composition. When the content of the polyfunctional acrylate compound is at the above upper limits or below, the polyfunctional acrylate compound is prevented from causing excessive initial curing, and the pot life is readily extended. When the content of the polyfunctional acrylate compound is small, moisture resistance is also enhanced. Accordingly, for example, even when the adhesive after being cured is used for a long period of time under high temperature and high humidity conditions, a high adhesive strength can be maintained. The content of the polyfunctional acrylate compound is more preferably 6% by mass or less, and even more preferably 4% by mass or less.

The content of the polyfunctional acrylate compound is preferably at a certain level or higher to exhibit fast curability and increase adhesion at the initial stage of curing, and is, for example, 0.3% by mass or more, preferably 0.5% by mass or more, more preferably 1% by mass or more, and even more preferably 1.5% by mass or more, based on the total amount of the adhesive.

The present invention is preferably configured such that, when an amine is used, one N-H of the active hydrogen groups (N-H) constituting an amino group contributes to the curing reaction and a certain amount of N-H remains. Accordingly, in the cured product, the adhesive is regulated such that the three-dimensional crosslinks are not excessively dense, and the elastic modulus is not high. Also, configuring the present invention such that a large amount of N-H remains enables the polarity of the cured product to be increased and adhesion to resin to be increased. Accordingly, by regulating the amount of remaining N-H groups, adhesion to resin can be regulated.

Also, the present invention is preferably configured such that, when a thiol is used, a certain amount of S-H remains. Accordingly, in the cured product, the adhesive is regulated such that the three-dimensional crosslinks are not excessively dense, and the elastic modulus is not high. Also, by causing S-H to remain, adhesion to metal can be increased.

When a thiol is used as a curing agent, the above amine is preferably used in combination, or at least any of a tri- or higher functional epoxy group-containing compound or a tri- or higher functional thiol is preferably contained. Accordingly, the adhesive can be regulated such that the elastic modulus is not excessively lowered. By regulating the amount of remaining S-H groups, adhesion to metal can be regulated.

From the viewpoint of increasing adhesion to both resin and metal, an amine and a thiol are preferably used in combination such that a certain amount of active hydrogen groups (N-H and S-H) remain.

Specifically, the content of the epoxy group-containing compound and the content of the amine in the adhesive are preferably regulated as follows:

Equivalent ratio of the number of active hydrogen atoms of amino groups contained in amine to the number of epoxy groups in epoxy group-containing compound [(Number of active hydrogen atoms of amino groups)/(Number of epoxy

groups)] = 1.2 or more and 2.9 or less

Due to the equivalent ratio being 1.2 or more, even when a low molecular weight binder component is used, the elastic modulus is readily lowered, and the elastic modulus at 80°C is readily regulated to the predetermined range. Also, due to the equivalent ratio being 2.9 or less, an excessively low elastic modulus is prevented, and low adhesive strength and the like are prevented. The equivalent ratio is more preferably 1.6 or more and even more preferably 2.0 or more, and is more preferably 2.8 or less and even more preferably 2.7 or less.

When the adhesive contains an epoxy group-containing compound, the main component of which is a bifunctional epoxy group-containing compound (e.g., containing a 50% by mass or more bifunctional epoxy group-containing compound based on all epoxy group-containing compounds), and a tri- or higher polyfunctional thiol, the content of the epoxy group-containing compound and the content of the polyfunctional thiol are preferably regulated as follows:

Equivalent ratio of the number of active hydrogen atoms contained in thiol to the number of epoxy groups in epoxy group-containing compound [(Number of active hydrogen atoms of thiol groups)/(Number of epoxy groups)] = 1.3 or more and 2.6 or less

Due to the equivalent ratio being 1.3 or more, even when a low molecular weight binder component is used, the elastic modulus is readily lowered, and the elastic modulus at 80°C is readily regulated to the predetermined range. Due to the equivalent ratio being 2.6 or less, an excessively low elastic modulus is prevented, and low adhesive strength and the like are prevented. The equivalent ratio is more preferably 1.35 or more and even more preferably 1.4 or more, and is more preferably 2.5 or less and even more preferably 2.25 or less.

When the adhesive contains an epoxy group-containing compound, the main component of which is a tri- or higher functional epoxy group-containing compound (e.g., containing a 50% by mass or more tri- or higher functional epoxy group-containing compound based on all epoxy group-containing compounds), and a bifunctional thiol, the content of the polyfunctional epoxy group-containing compound and the content of the thiol are preferably regulated as follows:

Equivalent ratio of the number of active hydrogen atoms contained in thiol to the number of epoxy groups in epoxy group-containing compound [(Number of active hydrogen atoms of thiol groups)/(Number of epoxy groups)] = 0.50 or more and 0.99 or less

Due to the equivalent ratio being 0.50 or more, an excessively low elastic modulus is prevented, and low adhesive strength and the like are prevented. Due to the equivalent ratio being 0.99 or less, even when a low molecular weight binder component is used, the elastic modulus is readily lowered, and the elastic modulus at 80°C is readily regulated to the predetermined range. The equivalent ratio is more preferably 0.55 or more and even more preferably 0.60 or more, and is more preferably 0.95 or less and even more preferably 0.90 or less.

Preferable equivalent ratios according to the types of epoxy compound, amine, and thiol have been described above and, even with combinations other than those provided above, by regulating the equivalent ratio, an excessively low elastic modulus is prevented, and low adhesive strength and the like are prevented, and, also, even when a low molecular weight binder component is used, the elastic modulus is readily lowered, and the elastic modulus at 80°C can be regulated to the predetermined range.

The number of epoxy groups refers to the total amount of epoxy groups contained in the adhesive, and is a value obtained by, for example, multiplying the number (mol/g) of epoxy groups per unit amount of the epoxy group-containing compound contained in the adhesive by the content of the epoxy group-containing compound. Note that, when two or more kinds of epoxy group-containing compounds are contained, it is the sum of the values obtained by multiplying the number (mol/g) of epoxy groups per unit amount of each epoxy group-containing compound by the content of each epoxy group-containing compound.

The number of active hydrogen atoms of amino groups refers to the total amount of active hydrogen atoms of amino groups contained in the adhesive, and is a value obtained by, for example, multiplying the number (mol/g) of active hydrogen atoms per unit amount of an amine in the adhesive by the content of the amine. Note that, when two or more kinds of amines are contained, it is the sum of the values obtained by multiplying the number (mol/g) of active hydrogen atoms per unit amount of each amine by the content of each amine. The number of active hydrogen atoms of the amine is 1 in $NHR_2$ and 2 in $NH_2R$ (provided that, in $NHR_2$ and $NH_2R$, R is a functional group other than active hydrogen, i.e., a part of the amine other than NH or $NH_2$).

The number (mol/g) of epoxy groups per unit amount of the epoxy resin and the number (mol/g) of active hydrogen atoms per unit amount of the amine can be calculated from, for example, the epoxy equivalent (g/eq) and the active hydrogen equivalent (g/eq), respectively.

Here, the epoxy equivalent can be obtained by dividing the molecular weight of the epoxy group-containing

compound by the number of epoxy groups per molecule. The active hydrogen equivalent can be obtained by dividing the molecular weight of the amine by the number of active hydrogen atoms per molecule. The molecular weight, the number of epoxy groups, and the number of active hydrogen atoms can be measured using a mass spectrometer (GC-MS or LC-MS). When only the molecular weight can be determined using a mass spectrometer, the number of epoxy groups and the number of active hydrogen atoms per molecule can be determined using NMR (such as $^1$H NMR) or the like. Note that, when the sample is a mixture, NMR is preferably performed after the components are separated by GPC (gel permeation chromatography) or HPLC (high performance liquid chromatography).

When the structural formula of the epoxy group-containing compound is known, the molecular weight and the number of epoxy groups are the molecular weight and the number of epoxy groups of the epoxy group-containing compound that can be calculated from the structural formula, respectively. Also, when the structural formula of the amine is known, the molecular weight and the number of active hydrogen atoms are the molecular weight and the number of active hydrogen atoms of the amine that can be calculated from the structural formula, respectively.

The number of active hydrogen atoms of thiol groups is the total amount of active hydrogen of thiol groups contained in the adhesive, and is, for example, a value obtained by multiplying the number (mol/g) of active hydrogen atoms per unit amount of thiol in the adhesive by the thiol content. Note that, when two or more kinds of thiols are contained, the number of active hydrogen atoms is obtained by summing the values obtained by multiplying the number (mol/g) of active hydrogen atoms per unit amount of each thiol by the content of each thiol. The number of active hydrogen atoms of the thiol is 1 in SHR (provided that R is a functional group other than active hydrogen, i.e., a portion of the thiol other than SH).

When both an amine and a thiol are contained, the number of active hydrogen atoms of amino groups and thiol groups is the sum of the number of active hydrogen atoms of amino groups and the number of active hydrogen atoms of thiol groups in the adhesive.

When no polyfunctional acrylate compound is used, the equivalent ratio is preferably regulated as described above, and when an epoxy group-containing compound and a polyfunctional acrylate compound are used in combination as base resins, the contents of the epoxy group-containing compound, the polyfunctional acrylate compound, and the amine in the adhesive are also preferably regulated such that the equivalent ratio of functional groups contained in the respective compounds is as shown in the following formula (1):

$$[A/(B+C)] = 1.1 \text{ or more and } 2.9 \text{ or less} \qquad (1)$$

wherein A is the number of active hydrogen atoms of amino groups contained in the amine compound, B is the number of epoxy groups contained in the epoxy resin, and C is the number of (meth)acryloyl groups contained in the acrylate compound in the adhesive.

Due to the equivalent ratio determined using formula (1) being 1.2 or more, even when a low molecular weight binder component is used, the elastic modulus is readily lowered, and the elastic modulus at 80°C is readily regulated to the predetermined range. Due to the equivalent ratio determined using formula (1) being 2.9 or less, an excessively low elastic modulus is prevented, and low adhesive strength and the like are prevented. The equivalent ratio determined using formula (1) is more preferably 1.6 or more and even more preferably 2.0 or more, and is more preferably 2.8 or less and even more preferably 2.7 or less.

The number of epoxy groups and the number of active hydrogen atoms in formula (1) are as described above. The number of (meth)acryloyl groups refers to the total amount of (meth)acryloyl groups contained in the adhesive, and is, for example, a value obtained by multiplying the number (mol/g) of (meth)acryloyl groups per unit amount of the (meth) acryloyl groups contained in the adhesive by the content of the polyfunctional acrylate compound. The number (mol/g) of (meth)acryloyl groups per unit amount of the polyfunctional acrylate compound can be calculated from, for example, the functional group equivalent (g/eq).

The number of (meth)acryloyl groups, as with the molecular weight, number of epoxy groups, and number of active hydrogen atoms described above, can be measured with a mass spectrometer (GC-MS or LC-MS).

The content of the binder in the adhesive is preferably 8% by volume or more and 65% by volume or less based on the total volume of the adhesive. When the content is at the lower limit or above, the thermally conductive filler can be suitably dispersed in the thermally conductive member and the adhesive. Also, the viscosity of the adhesive can be prevented from becoming unnecessarily high. When the content is at the upper limit or below, a certain amount or more of the thermally conductive filler is readily contained in the adhesive. The content of the binder in the adhesive is more preferably 15% by volume or more and 55% by volume or less, and even more preferably 18% by volume or more and 45% by volume or less.

[Thermally conductive filler]

The adhesive of the present invention contains a thermally conductive filler. Due to the thermally conductive filler contained in the adhesive, the thermal conductivity of the thermally conductive member formed from the adhesive is enhanced.

Examples of the thermally conductive filler include metals, metal oxides, metal nitrides, metal hydroxides, carbon materials, and non-metal oxides, nitrides, and carbides. The form of the thermally conductive filler may be spherical or a powder having an indefinite shape.

Examples of metals in the thermally conductive filler include aluminum, copper, and nickel, examples of metal oxides include aluminum oxide represented by alumina, magnesium oxide, and zinc oxide, and examples of metal nitrides include aluminum nitride. The metal hydroxide may be aluminum hydroxide. The carbon material may be nodular graphite. Examples of non-metal oxides, nitrides, and carbides include quartz, boron nitride, and silicon carbide. Among these, aluminum oxide is preferable from the viewpoint of enhancing the heat dissipating properties of the thermally conductive member, and aluminum hydroxide is preferable when enhancing flame retardancy.

One thermally conductive filler may be used singly, or two or more may be used in combination.

The average particle size of the thermally conductive filler is preferably 0.1 μm or more and 200 μm or less, more preferably 0.5 μm or more and 150 μm or less, and even more preferably 1 μm or more and 110 μm or less.

The thermally conductive filler is preferably a combination of a small particle size thermally conductive filler having an average particle size of 0.1 μm or more and 5 μm or less and a large particle size thermally conductive filler having an average particle size of more than 5 μm and 200 μm or less. By using thermally conductive fillers having different average particle sizes, the filling rate can be increased.

The average particle size of thermally conductive fillers can be measured by observation under an electron microscope or the like. More specifically, for example, the particle sizes of randomly selected 50 thermally conductive filler particles are measured using an electron microscope or an optical microscope, and the average (arithmetic mean) thereof can be taken as the average particle size.

The content of the thermally conductive filler in the adhesive is preferably 30% by volume or more and 90% by volume or less based on the total volume of the adhesive. When the content is at the lower limit or above, a certain level of thermal conductivity can be imparted to the adhesive. By regulating the content of the thermally conductive filler to the above upper limit or below, the thermally conductive filler can be suitably dispersed in the thermally conductive member, and also the viscosity of the adhesive can be prevented from becoming unnecessarily high. In the present invention, by lowering the viscosity of the adhesive, the content of the thermally conductive filler is readily increased. The content of the thermally conductive filler in the adhesive is more preferably 40% by volume or more and 80% by volume or less, and even more preferably 50% by volume or more and 75% by volume or less.

The content of the thermally conductive filler in the adhesive, when expressed in part by mass, is preferably 150 parts by mass or more and 3000 parts by mass or less, more preferably 200 parts by mass or more and 2000 parts by mass or less, and even more preferably 300 parts by mass or more and 1000 parts by mass or less, based on 100 parts by mass of the binder.

(Dispersant)

The adhesive of the present invention may contain a dispersant. The dispersant may be a polymer-based dispersant. The polymer-based dispersant may be a polymer compound having a functional group. Examples of the polymer compound include acryl-based, vinyl-based, polyester-based, polyurethane-based, polyether-based, epoxy-based, polystyrene-based, amino-based, and silicone-based compounds. Examples of the functional group include a carboxyl group, a phosphoric acid group, a sulfonic acid group, a carboxylic acid ester group, a phosphoric acid ester group, a sulfonic acid ester group, a hydroxyl group, an amino group, a quaternary ammonium salt group, and an amide group. A dispersant that is not a polymer dispersant may also be used, and an alkoxysilane compound may also be used. The content of the dispersant in the adhesive is preferably 0.1 parts by mass or more and 10 parts by mass or less, more preferably 0.2 parts by mass or more and 5 parts by mass or less, and even more preferably 0.4 parts by mass or more and 3 parts by mass or less, based on 100 parts by mass of the binder.

(Plasticizer)

The adhesive of the present invention may contain a plasticizer. Due to the plasticizer contained, the elongation of the adhesive is readily enhanced, the viscosity is readily lowered, and workability and the like are enhanced.

Specific examples of the plasticizer include organic ester plasticizers such as monobasic organic acid esters and polybasic organic acid esters, organic phosphorus-based plasticizers such as organic phosphate plasticizers and organic phosphite acid plasticizers, sulfonamides, and epoxy-based plasticizers such as epoxidized soybean oil. The plasticizer is

preferably an organic ester plasticizer.

Examples of the monobasic organic acid esters include glycol esters obtained by reacting glycols with monobasic organic acids. Examples of the glycols include triethylene glycol, tetraethylene glycol, and tripropylene glycol. Examples of the monobasic organic acids include butyric acid, isobutyric acid, caproic acid, 2-ethylbutyric acid, heptyl acid, n-octylic acid, 2-ethylhexanoic acid, n-nonylic acid, decylic acid, and benzoic acid.

Examples of the polybasic organic acid esters include ester compounds of polybasic organic acids and alcohols having a linear or branched structure with 3 to 10 carbon atoms. Examples of the polybasic organic acids include adipic acid, sebacic acid, azelaic acid, and 1,2-cyclohexanedicarboxylic acid.

Examples of the organic ester plasticizers include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2- ethylhexanoate, dipropylene glycol di-2-ethylbutyrate, triethylene glycol di-2-ethylpentanoate, tetraethylene glycol di-2-ethylbutyrate, diethylene glycol dicaprylate, diethylene glycol dibenzoate, dipropylene glycol dibenzoate, diisononyl 1,2-cyclohexanedicarboxylate, dihexyl adipate, dioctyl adipate, hexylcyclohexyl adipate, a mixture of heptyl adipate and nonyl adipate, diisononyl adipate, diisodecyl adipate, heptylnonyl adipate, dibutyl sebacate, oil-modified alkyd sebacate, and a mixture of a phosphoric acid ester and an adipic acid ester. Other organic ester plasticizers may be used as well. Adipic acid esters other than the above adipic acid esters may be used as well.

Examples of the organic phosphorus-based plasticizers include tributoxyethyl phosphate, isodecylphenyl phosphate, and triisopropyl phosphate.

The plasticizer is preferably a diester plasticizer represented by the following formula (1) or (2):

[Formula 1]

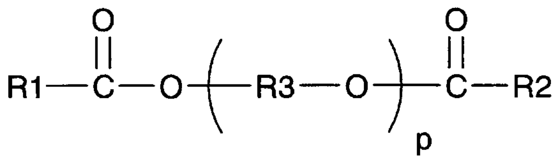

···(1)

wherein R1 and R2 each represent an organic group having 2 to 10 carbon atoms, R3 represents an ethylene group, an isopropylene group, or a n-propylene group, and p represents an integer of 3 to 10. R1 and R2 in formula (1) are each preferably an organic group having 5 to 10 carbon atoms, and more preferably an organic group having 6 to 10 carbon atoms.

[Formula 2]

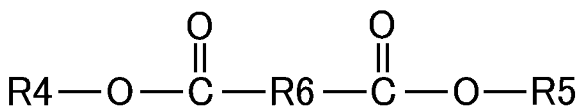

···(2)

R4 and R5 in formula (2) each represent a hydrocarbon group having 3 to 10 carbon atoms, and R6 represents a hydrocarbon group having 2 to 10 carbon atoms. R4 and R5 in formula (2) each preferably have 4 to 9 carbon atoms, and more preferably have 6 to 9 carbon atoms. The hydrocarbon groups of R4 and R5 are each preferably an alkyl group. The alkyl group may be linear or branched. R6 preferably has 4 to 9 carbon atoms, and more preferably has 5 to 8 carbon atoms. The hydrocarbon group of R6 is preferably an aliphatic hydrocarbon group and, in particular, more preferably an unsaturated aliphatic hydrocarbon group. R6 may be linear or may have a branched or cyclic structure, and preferably has a cyclic structure.

The plasticizer preferably contains triethylene glycol di-2-ethylhexanoate (3GO), triethylene glycol di-2-ethylbutyrate (3GH), triethylene glycol di-2-ethylpropanoate, or diisononyl 1,2-cyclohexanedicarboxylate (DINCH). The plasticizer more preferably contains triethylene glycol di-2-ethylhexanoate (3GO), triethylene glycol di-2-ethylbutyrate (3GH), or diisononyl 1,2-cyclohexanedicarboxylate (DINCH), and even more preferably contains triethylene glycol di-2-ethylhexanoate.

From the viewpoint of reducing the viscosities of the first agent, the second agent, and a composition obtained by mixing them, the molecular weight of the plasticizer is preferably less than 1000 and more preferably less than 500, and is preferably 50 or more and more preferably 100 or more. Moreover, the molecular weight of the plasticizer is preferably 50 or

more and less than 1000, and more preferably 100 or more and less than 500. When the structural formula of the plasticizer is known, the molecular weight of the plasticizer is a molecular weight calculated from the structural formula, and when the structural formula is unknown, the molecular weight can be measured with a mass spectrometer (GC-MS or LC-MS).

The content of the plasticizer in the adhesive is preferably 3% by mass or more and 20% by mass or less, more preferably 5% by mass or more and 15% by mass or less, and even more preferably 7% by mass or more and 10% by mass or less, based on the total amount of the heat-conductive composition. When the amount of the plasticizer is at these lower limits or above, the viscosity of the composition can be lowered. When the amount of the plasticizer is at these upper limits or below, the reliability of the adhesive is readily enhanced.

(Other additives)

The adhesive of the present invention may contain additives other than those described above, and examples of such additives include curing catalysts such as water and bisphenol A that catalyze the reaction between the base resin and the curing agent, silanol condensation catalysts, reaction rate control agents (curing retardants) that suppress the reaction between the base resin and the curing agent, thixotropy imparting agents, flame retardants, antioxidants, colorants, dehydrating agents, and adhesion promoters.

Preferably, the adhesive of the present invention does not contain a polyfunctional (meth)acrylate. By not containing a polyfunctional (meth)acrylate, a high crosslinking density can be prevented, and the elastic modulus at 80°C can be lowered.

When using a plasticizer, a plasticizer having a high molecular weight is preferably used, and a reactive plasticizer or a substantially non-volatile plasticizer is more preferably used.

<Supply form>

The form of the adhesive of the present invention may be a one-component type or a two-component type in which a first agent and a second agent are combined, and the two-component type is preferable from the viewpoint of storage stability.

In a two-component adhesive, the volume ratio of the first agent to the second agent (second agent/first agent) is preferably 1 or a value close to 1 and, specifically, preferably 0.9 or more and 1.1 or less, and more preferably 0.95 or more and 1.05 or less. Thus, regulating the volume ratio of the first agent to the second agent to 1 or a value close to 1 facilitates the preparation of the adhesive.

In a two-component adhesive, preferably, the first agent and the second agent are both liquid at ordinary temperature (25°C), and the viscosities of the first agent and the second agent are the same, or even when the viscosities are different, the difference between the viscosities is preferably small. Thus, regulating the viscosities of the first agent and the second agent to mutually the same or close values facilitates the uniform mixing of the adhesive.

Specifically, the difference between the viscosity (Pa·s) of the first agent and the viscosity (Pa·s) of the second agent is preferably 150 Pa·s or less, more preferably 100 Pa·s or less, and even more preferably 50 Pa·s or less. The viscosity difference may be 0 Pa·s or more.

The viscosities of the first agent and the second agent are each not particularly limited, and are, for example, 10 Pa·s or more and 300 Pa·s or less, preferably 30 Pa·s or more and 250 Pa·s or less, and more preferably 40 Pa·s or more and 200 Pa·s or less.

The viscosities of the first agent and the second agent as referred to herein can be measured with a rheometer (for example, the "MCR-302e" rheometer manufactured by Anton Paar) by regulating the temperature of a sample to 25°C using a Peltier plate, placing the sample on a φ25 mm parallel plate, leaving the sample to stand still for 10 minutes, and then continuously changing the shear rate within the range of 0.0001 to 100 (1/sec). The viscosity value is a value at a shear rate of 3.16 (1/s).

More specifically, in a two-component adhesive, the first agent may contain the base resin of a binder, and the second agent may contain a curing agent for the binder. A curing agent that cures when mixed with the first agent is preferably used. Below, a representative configuration of a two-component adhesive wherein an epoxy-based binder is used will now be described in detail.

In a two-component adhesive, the first agent contains a base resin (an epoxy group-containing compound in the case of an epoxy-based binder) and does not have to contain a curing agent (an amine and a thiol in the case of an epoxy-based binder). A curing catalyst may be contained as necessary.

On the other hand, the second agent contains a curing agent (an amine and a thiol in the case of an epoxy-based binder). The second agent does not have to contain a curing catalyst, and does not have to contain a base resin (an epoxy group-containing compound in the case of an epoxy-based binder). However, the second agent may contain a base resin (an epoxy group-containing compound in the case of an epoxy-based binder) as long as it does not react with the curing agent. Moreover, when a polyfunctional acrylate compound is used in an epoxy-based binder, preferably, the polyfunctional acrylate compound is contained in the first agent, and no polyfunctional acrylate compound is contained in the second agent.

Moreover, when the binder is the organic polymer having a hydrolyzable silyl group, the organic polymer having a hydrolyzable silyl group is preferably contained in both the first agent and the second agent as described above. When the organic polymer having a hydrolyzable silyl group is contained as a binder, preferably, a plasticizer is contained in both the first agent and the second agent as necessary, then at least one selected from a dehydrating agent, an adhesion promoter, or a silanol condensation catalyst is contained in the first agent, and water is contained in the second agent.

The thermally conductive filler is contained in at least one of the first agent or the second agent, and is preferably contained in both the first agent and the second agent.

Accordingly, when the adhesive contains a base resin and a curing agent, preferably, the first agent contains the base resin (an epoxy group-containing compound in the case of an epoxy-based binder) and a thermally conductive filler, and the second agent contains the curing agent (at least any of an amine or a thiol in the case of an epoxy-based binder) and a thermally conductive filler. More preferably, the first agent does not contain a curing agent, and the second agent does not contain a base resin. Accordingly, even more preferably, the entirety of the base resin of the adhesive is contained in the first agent, and the entirety of the curing agent of the adhesive is contained in the second agent.

The thermally conductive filler is preferably contained in both the first agent and the second agent as described above and, in particular, is more preferably contained approximately equally in the first agent and the second agent. Specifically, the ratio (volume ratio) of the content of the thermally conductive filler in the second agent to the content of the thermally conductive filler in the first agent is preferably 0.67 or more and 1.5 or less, more preferably 0.83 or more and 1.2 or less, and even more preferably 0.91 or more and 1.1 or less. By approximately equally distributing the thermally conductive filler in the first agent and the second agent, the difference between the viscosities of the first agent and the second agent is readily reduced, and the volume ratio of the first agent to the second agent is also readily brought close to 1.

The difference between the viscosities of the first agent and the second agent can also be regulated by the viscosities of the epoxy compound, amine, and thiol to be used. For example, specifically, when it is desired to lower the viscosity of the first agent containing an epoxy compound, a low-viscosity epoxy compound is used, or the content is increased. The viscosity may also be lowered by adding a dispersant or a plasticizer.

In order to regulate the viscosity difference and volume ratio between the first agent and the second agent while regulating the range of the equivalent ratio of the number of epoxy groups to active hydrogen, the content of the thermally conductive filler and the amount of a plasticizer added not having active hydrogen are preferably regulated.

In the case of a combination in which the first agent contains an epoxy group-containing compound as a main component and the second agent contains at least one of an amine or a thiol as a main component, there may be a difference between the densities of the first agent and the second agent. The first agent and the second agent may be readily mixed when their densities are close, and thus the density difference is preferably small. Specifically, the ratio of the density of the first agent to the density of the second agent (also referred to as a density ratio) is preferably 0.7 or more and 1.4 or less, more preferably 0.8 or more and 1.2 or less, and even more preferably 0.9 or more and 1.1 or less.

To reduce the density ratio, the content of the thermally conductive filler in the first agent and the second agent may be regulated within the above range.

The phrase "the first agent contains an epoxy group-containing compound as a main component" means that more than 50% by mass of all epoxy group-containing compounds contained in the curable thermally conductive adhesive are contained in the first agent. The phrase "the second agent contains at least one of an amine or a thiol as a main component" means that more than 50% by mass of all amines and thiols contained in the curable thermally conductive adhesive are contained in the second agent

In a two-component type, the dispersant and other additives are contained in one or both of the first agent and the second agent as necessary. For example, when the thermally conductive filler is contained in both the first agent and the second agent, the dispersant is contained in both the first agent and the second agent.

In a two-component adhesive, the ratio of the functional group concentration (mol/g) of the second agent to the functional group concentration (mol/g) of the first agent is preferably 1.2 or more and 2.9 or less. By regulating the functional group concentrations of the first agent and the second agent to the above range, the base resin and the curing agent react in a suitable equivalent ratio when the first agent and the second agent are mixed in a volume ratio of 1:1, and thus the adhesive can be cured such that the three-dimensional crosslinking is not excessively dense and the elastic modulus is not high, while maintaining suitable adhesive strength.

The ratio of functional group concentrations is more preferably 1.6 or more and even more preferably 2.0 or more, and is more preferably 2.8 or less and even more preferably 2.7 or less.

The functional group concentration refers to the concentration of functional groups that are contained in the base resin or the curing agent and that can react with the curing agent or the base resin, the epoxy group is the functional group in the epoxy group-containing compound, and the number of epoxy groups per unit amount (g) is the functional group concentration. In an amine and a thiol, active hydrogen is the functional group, and the number of active hydrogen atoms per unit amount (g) is the functional group concentration.

For example, in a preferable aspect, the first agent contains an epoxy group-containing compound and contains neither an amine nor a thiol, and the second agent contains any of an amine and a thiol and contains no epoxy group-containing compound. In this case, the concentration of epoxy groups in the first agent is the functional group concentration of the first agent, and the concentration of active hydrogen of the amine and the thiol in the second agent is the functional group concentration of the second agent.

When the adhesive is a two-component type, separate containers are preferably filled with the first agent and the second agent, and specifically a first container is filled with the first agent, and a second container is filled with the second agent. The first container and the second container may be separate bodies, or may be integrated into a single body. Integrating the first container and the second container into a single body facilitates the supplying of the first container and the second container as a container set to the demand destination. Herein, the first container filled with the first agent and the second container filled with the second agent may be collectively referred to as a container set.

Examples of containers include, but are not limited to, syringes, cartridges, pail cans, and drums. For example, when filling a syringe with the adhesive, the syringe is preferably a dual barrel syringe. As shown in Fig. 1, a dual barrel syringe 30 has a first syringe 31 constituting a first container and a second syringe 32 constituting a second container that are parallelly integrated into a single body. A first agent 35 and a second agent 36 with which the syringes 31, 32 are filled respectively may be discharged from the syringes that serve as dispensers and mixed.

When using a cartridge, the container set may be composed of a first cartridge constituting the first container and a second cartridge constituting the second container, and such cartridges may be integrated into a single body. The cartridges may be usually attached to syringes (e.g., a first syringe and a second syringe) or the like, and the first agent delivered from the first cartridge and the second agent delivered from the second cartridge may be discharged from the respective outlets of the first syringe and the second syringe that serve as dispensers and mixed.

The first agent and the second agent may be mixed using a mixing apparatus such as a static mixer. For example, as shown in Fig. 1, a static mixer 38 may be connected to an outlet 31A of the first syringe 31 and an outlet 32A of the second syringe 32, and the first agent 35 and the second agent 36 discharged from the outlets 31A and 32A can be mixed inside the mixer 38. The mixture (adhesive) obtained by being mixed in the mixer 38 may be discharged from an outlet 39 of the mixer 38.

Each of the syringes 31, 32 may have a structure in which the openings of barrels 33A, 34A respectively filled with the first agent 35 and the second agent 36 are closed by lids 33B, 34B. Concerning the syringe 30 shown in Fig. 1, the first agent 35 and the second agent 36 after the lids 33B, 34B are removed may be respectively discharged from the outlets 31A, 32A by being pushed by plungers (not shown) inserted through the openings.

When using pail cans, the container set may include a first pail can 41 that constitutes the first container and is filled with a first agent 45 and a second pail can 42 that constitutes the second container and is filled with a second agent 46 as shown in Fig. 2. For example, the pail cans 41, 42 respectively include container bodies 43A, 44A that are filled with the first agent 45 and the second agent 46, respectively, and have openings, and lids 43B, 44B for closing the openings of the container bodies 43A, 44A, respectively.

(Method for preparing adhesive)

When the adhesive of the present invention is a two-component type, the first agent and the second agent may be obtained by mixing the components constituting the first agent and the second agent, respectively. Similarly, the adhesive when being a one-component type may be obtained by mixing the components constituting the adhesive. The method for mixing the components is not particularly limited, and, for example, the adhesive may be prepared by adding an optionally used thermally conductive filler and, moreover, optionally used additives such as a dispersant to a binder, and then stirring or kneading the mixture.

The thermally conductive filler may also be surface-treated with a dispersant before being mixed with the binder. By being surface-treated with a dispersant in advance, the thermally conductive filler has a surface that is modified with the dispersant in advance. The thermally conductive filler that is surface-modified in advance may then be mixed with the binder to prepare the adhesive.

The method for treating the surface with a dispersant in advance is not particularly limited, and a known method can be used such as a wet treatment method or a dry treatment method. In the wet treatment method, for example, the thermally conductive filler may be added to and mixed with a treatment liquid in which the dispersant is dispersed or dissolved in a solvent, and then the mixture may be dried, thermally treated, washed, or the like to cause the dispersant to be bonded or attached to the surface of the thermally conductive filler. The dry treatment method is a surface treatment method that does not involve a dispersion medium, and, specifically, the thermally conductive filler is added to the dispersant, and the mixture is stirred by a mixer or the like and then thermally treated to cause the dispersant to be bonded or attached to the surface of the thermally conductive filler.

[Thermally conductive member]

The adhesive of the present invention may be used as a thermally conductive member. The adhesive of the present invention becomes a thermally conductive member by being cured. The thermally conductive member of the present invention contains a polymer matrix and a thermally conductive filler. The polymer matrix is obtained by curing a binder, and the thermally conductive filler is dispersed within the polymer matrix and retained by the polymer matrix. Accordingly, for example, when the binder is an epoxy-based binder, the polymer matrix is formed of a cured product of an epoxy resin.

The details of the thermally conductive filler in the thermally conductive filler are the same as those of the thermally conductive filler in the adhesive, and the description thereof is thus omitted. The details of the binder for forming the polymer matrix are also the same as those of the binder in the adhesive, and the description thereof is thus omitted. The same also applies to the dispersant and other additives.

Note that the content of the binder and the content of the thermally conductive filler above are described as being based on the total volume of the adhesive, and since the thermally conductive member is formed from the adhesive, the above contents based on the total volume of the adhesive can be regarded in the thermally conductive member as the contents based on the total volume of the thermally conductive member.

The thermally conductive member of the present invention has a mass loss rate of 1.5% or less after a thermal cycling test having 3 hours at -40°C and 3 hours at 80°C, and an elastic modulus at 80°C of $1.2 \times 10^8$ Pa or less. The thermally conductive member of the present invention having the above configuration is also highly reliable while ensuring low viscosity, high thermal conductivity, and high adhesion.

Preferable numerical ranges of the mass loss rate after the thermal cycling test and the elastic modulus at 80°C of the thermally conductive member are the same as the preferable numerical ranges of the mass loss rate after the thermal cycling test and the elastic modulus at 80°C of the cured product of the adhesive and, therefore, the description thereof is omitted. The elastic moduli at 25°C and -40°C, the glass transition temperature, and the thermal conductivity of the thermally conductive member are also the same as those of the cured product of the adhesive and, therefore, the description thereof is omitted.

In addition, the measurement of the mass loss rate after the thermal cycling test, the elastic moduli, the glass transition temperature, and the thermal conductivity of the thermally conductive member is the same as the measurement methods for the cured product of the adhesive except that a test sample is obtained from the thermally conductive member.

[Applications]

The adhesive and the thermally conductive member of the present invention can be used in a variety of applications, for example can be used for various electronic device applications, exemplified by battery assemblies such as lithium-ion battery (LiB) assemblies, power electronics, electronics packaging, LEDs, solar cells, and electrical grids. Among these, the adhesive and the thermally conductive member are preferably used in a battery assembly, and more preferably used in a LiB assembly. Accordingly, in a preferable embodiment of the present invention, a battery assembly provided with the above thermally conductive member is provided. The battery assembly such as a LiB assembly can be preferably used in automobiles.

In battery assembly applications, the adhesive or the thermally conductive member of the present invention is preferably used as a gap filler in a battery assembly. Also, the adhesive or the thermally conductive member of the present invention is, in one aspect, preferably used in a battery module, and more preferably used as a gap filler in a battery module. Below, an example in which the thermally conductive member of the present invention is applied to a battery module will now be described.

The battery module includes a gap filler composed of the thermally conductive member, a plurality of battery cells, and a module housing accommodating the battery cells, wherein the gap filler is disposed inside the module housing. The gap filler composed of the thermally conductive member is provided between the battery cells and between the battery cells and the module housing, and the provided gap filler tightly adheres to the battery cells and the module housing. Accordingly, the gap filler between the battery cells has a function of maintaining the separated state between the battery cells. Also, the gap filler between the battery cells and the module housing tightly adheres to both the battery cells and the module housing, and functions to transfer heat produced by the battery cells to the module housing.

Fig. 3 shows a specific configuration of a battery module. Fig. 4 shows a specific configuration of each battery cell. As shown in Fig. 3, a plurality of battery cells 11 are disposed inside a battery module 10. Each battery cell 11 is laminated and encapsulated within a flexible exterior film, and the overall shape is a flat body that has a small thickness in relation to the height and width. As shown in Fig. 4, the battery cell 11 is formed such that a positive electrode 11a and a negative electrode 11b are exposed outside, and a central part 11c of the flat surface is thicker than a crimped edge 11d.

As shown in Fig. 3, the battery cells 11 are disposed such that their flat surfaces face each other. In the configuration of Fig. 3, the gap filler 13 is provided not to cover the entirety of the battery cells 11 accommodated inside the

module housing 12. The gap filler 13 is provided so as to fill the gaps present in a portion (bottom part) inside the module housing 12. The gap filler 13 is provided between the battery cells 11 and between the battery cells 11 and the module housing 12, and tightly adheres to these portions of the surfaces of the battery cells 11 and the inner surface of the module housing 12.

The gap filler 13 provided between the battery cells 11 adheres to the surfaces of the battery cells 11, the gap filler 13 itself has suitable elasticity and flexibility, and thus even when external force that displaces the space between the battery cells 11 is applied, the gap filler 13 can mitigate strain/deformation caused by the external force. Accordingly, the gap filler 13 has a function of maintaining the separated state between the battery cells 11.

The gap filler 13 provided in a gap between the battery cells 11 and the inner surface of the module housing 12 also tightly adheres to the surfaces of the battery cells 11 and the inner surface of the module housing 12. As a result, heat produced inside the battery cells 11 is transferred via the gap filler 13 adhering to the surfaces of the battery cells 11 to the inner surface of the module housing 12 to which the other surface of the gap filler 13 tightly adheres.

The gap filler 13 can be formed in the battery module 10 by applying a liquid adhesive using a commonly used dispenser and then curing the liquid adhesive. As described above, the adhesive of the present invention has low viscosity, and thus workability during the formation of the gap filler 13 is enhanced. Moreover, the gap filler 13 is highly reliable, and the high thermal conductivity of the gap filler 13 can be maintained over a long period of time.

When forming the gap filler 13, the two-component adhesive described above is preferably used. The two-component adhesive is easy to store, is unlikely cured when applied using a dispenser when mixed immediately before use, and can promptly be cured after being applied. Also, application using a dispenser is preferable also in that the liquid adhesive can reach relatively deep inside the housing 12 of the battery module 10.

The gap filler 13 for covering the battery cells 11 preferably covers 20 to 40% of each battery cell 11 on one side of the battery cell 11. With a coverage of 20% or more, the battery cells 11 can be stably retained. Also, by sufficiently covering battery cells that produce a large amount of heat, heat dissipation efficiency is enhanced. On the other hand, with a coverage of 40% or less, heat produced from the battery cells 11 can be efficiently dissipated, and a weight increase, deterioration of workability, and the like can also be prevented. To enhance heat dissipation efficiency, it is preferable to cover the side of the battery cells 11 on which there are the electrodes 11a, 11b with the gap filler 13, and more preferable to cover the entirety of the electrodes 11a, 11b with the gap filler 13. As described above, the battery module 10 can cause heat produced from the battery cells 11 to escape to the module housing 12 via the gap filler 13.

The gap filler 13 is also preferably used in a battery pack including a plurality of battery modules 10 inside. A battery pack generally includes the battery modules 10 and a battery pack housing accommodating the battery modules 10. In the battery pack, the gap filler 13 can be provided between the battery modules 10 and the battery pack housing. Accordingly, heat that has escaped to the module housing 12 as described above can further escape to the battery pack housing, thus enabling effective heat dissipation.

While the battery assembly has been described so far in reference to a battery module or a battery pack including a battery module as an example, the present invention may be applied to a battery assembly having no battery module, and is also preferably applied to, for example, a battery assembly having a cell-to-pack structure.

Fig. 3 shows a schematic diagram of a battery assembly having a cell-to-pack structure. A battery assembly 20 having a cell-to-pack structure includes a plurality of battery cells 21 and a battery pack housing, and the battery cells 21 are bonded to a base member 25 constituting the battery pack housing via a gap filler 23 composed of a thermally conductive member (a cured product of the adhesive). The base member 25 may constitute a cooling plate or the like. The adhesive of the present invention has high thermal conductivity and adhesive strength, accordingly the gap filler 23 composed of a cured product of the adhesive can bond the battery cells 21 to the base member 25 with increased adhesion and cause heat produced from the battery cells 21 to effectively escape to the base member 25. The cured product of the adhesive is highly reliable, and thus the high thermal conductivity of the gap filler 23 can be maintained over a long period of time. The gap filler 23 in the battery assembly 20 may be formed in the same manner as the formation of the gap filler 13 in the above battery module using, for example, a commonly used dispenser. Since the adhesive of the present invention has low viscosity, the workability during the formation of the gap filler 23 is also enhanced.

## Examples

Below, the present invention will now be described in more detail by way of Examples, but the present invention is not limited to the Examples in any way.

### [Elastic modulus]

The elastic modulus of the cured product of the adhesive was measured by the following method. The adhesive was applied to the surface of a silicone-based release treated PET film having 20 cm × 20 cm using an applicator such that the adhesive after being cured had a thickness of 1 mm. Thereafter, the adhesive applied to the silicone-based release

treated PET film was cured in an environment having 25°C and 50% RH by being left to stand for 168 hours, and then the silicone-based release treated PET film was peeled off, and a test sample (a cured product) having 30 mm × 5 mm and a thickness of 1 mm was cut out from the resulting cured product. The measurement was performed on the resulting test sample using a forced-vibration dynamic viscoelasticity analyzer ("DVA-200" manufactured by ITK Co., Ltd.) under tensile measurement conditions having a frequency of 10 Hz, a strain of 0.01%, a temperature range of -40°C to 100°C, and a heating rate of 5°C/min, and the measured values of storage elastic modulus E' at -40°C, 25°C, and 80°C were defined as an elastic modulus at -40°C, an elastic modulus at 25°C, and an elastic modulus at 80°C, respectively.

[Mass loss rate (%) after thermal cycling test]

The mass loss rate (%) of the cured product of the adhesive after the thermal cycling test was measured by the following method. The adhesive was applied to the surface of a 20 cm × 20 cm silicone-based release treated PET film using an applicator such that the adhesive after being cured had a thickness of 1 mm. Thereafter, the adhesive applied to the silicone-based release treated PET film was cured in an environment having 25°C and 50% RH by being left to stand for 168 hours, and then the silicone-based release treated PET film was peeled off, and a test sample (a cured product) having 20 mm × 20 mm and a thickness of 1 mm was obtained. The resulting test sample was subjected to 20 cycles of a thermal cycling test between -40°C and 80°C (3 hours each, heat-up time and cool-down time were both 1 minute). The mass of the test sample was measured before and after the thermal cycling test, and the mass loss rate was calculated using the following formula:

Mass loss rate (%) = (1 - (Mass of test sample after thermal cycling test / Mass of test sample after thermal cycling test)) × 100

[Glass transition temperature]

The glass transition temperature of the cured product of the adhesive was measured in the same manner as the elastic modulus described above, and the temperature at maximum tan$\delta$ was defined as the glass transition temperature.

[Adhesion test]

The adhesive strength at 25°C of the cured product of the adhesive was measured by the following method. First, two PET plates (trade name "PET-6010", manufactured by C.I. TAKIRON Corporation) each having a width of 25 mm, a length of 100 mm, and a thickness of 2 mm were provided. The adhesive was then applied to the longitudinal end of one plate over the entire width of the plate to a length of 5 mm such that the thickness after curing was 1 mm. Then, the longitudinal end of another plate was placed on top of the applied adhesive, and the plates were left to stand in this state in an environment having 25°C and 50% RH for 168 hours to cure the adhesive and give a measurement sample. The measurement sample was formed such that two PET plates overlapped each other across the entire width over a length of only 5 mm, and the films were bonded together at the overlapping portion via the cured product of the adhesive (size: 25 mm × 5 mm, thickness 1 mm) and had a width of 25 mm and a length of 195 mm. A tensile test was performed on the resulting measurement sample wherein the measurement sample was pulled in the longitudinal directions in an environment having 25°C and 50% RH at a tensile speed of 10 mm/sec until it broke, and the maximum load was defined as adhesive strength. In addition, the elongation value at maximum load was defined as elongation at maximum load. The failure mode at the time of fracture was also observed, and in Tables 1 and 2, cohesive failure is indicated as "G", and interfacial failure is indicated as "K".

[Thermal conductivity]

Concerning the thermal conductivities of the first agent and the second agent of the adhesive, the thermal conductivity of each sample was measured using a thermal diffusivity - thermal conductivity analyzer ("ai-Phase Mobile M3", manufactured by Hitachi High-Tech Corporation). Specifically, 2 ml of the adhesive was applied to an aluminum plate having a thickness of 1 mm, then sandwiched with a glass plate having a thickness of 1 mm so as to have a thickness of 1 mm, and cured at 18°C for 18 hours to give a test sample. The resulting test sample was subjected to 20 cycles of a thermal cycling test between -40°C and 80°C (3 hours each, heat-up time and cool-down time were both 1 minute). Before and after the thermal cycling test, the test sample was scanned in a range of 0.1 to 1.0 Hz to determine thermal diffusivity. This measurement was performed at 20 different locations on the test sample. Next, the thermal conductivity was calculated by multiplying the measured thermal diffusivity by the specific heat and density. The thermal conductivity was the average of the 20 locations, and the standard deviation was determined at the same time. Then, the thermal conductivity and the standard deviation obtained by the above method were evaluated according to the following criteria:

A: Thermal conductivity was 1.5 W/m·K or more, and standard deviation was 0.2 W/m·K or less
B: Thermal conductivity was 0.7 W/m·K or more and less than 1.5 W/m·K, and standard deviation was 0.25 W/m·K or less
C: Thermal conductivity was less than 0.7 W/m·K, or standard deviation exceeded 0.25 W/m·K

[Viscosity]

A sample of the adhesive immediately after preparation (immediately after mixing the first agent and the second agent) was measured with a rheometer (for example, "MCR-302e" rheometer manufactured by Anton Paar) by regulating the temperature of the sample to 25°C using a Peltier plate, placing the sample on a φ25 mm parallel plate and, immediately, continuously changing the shear rate within the range of 0.0001 to 100 (1/s). The viscosity value was a value of viscosity measured at a shear rate of 3.16 (1/s). Concerning the first agent and the second agent before being mixed, the viscosities were measured in the same manner after samples were placed and left to stand for 10 minutes.

<Evaluation>

[Thermal cycling test]

First, 6.5 to 7.0 ml of the adhesive was applied to the central part of an aluminum plate having a thickness of 1 mm and a size of 10 cm × 10 cm so as not to include air bubbles. Then, a 2 mm shim ring was placed at the four corners of the aluminum plate. Next, a glass plate (a thickness of 2 mm, a size of 10 cm × 10 cm) was placed on top of the applied sample, the applied adhesive was pressed to be spread so as to exactly overlap the aluminum plate, and the four corners over the shim rings were clipped.
The resulting structure was left to stand at 25°C at 50% RH for 168 hours to cure the adhesive, and thus a test sample was obtained in which the aluminum plate and the glass plate were bonded together by the cured adhesive having a thickness of 2 mm. The resulting test sample was subjected to 20 cycles of a thermal cycling test between -40°C and 80°C (3 hours each, heat-up time and cool-down time were both 1 minute). The condition of the test sample at that time was evaluated according to the following judgment criteria:

[Judgment criteria]

A: No peeling or volatilization marks
B: Minor peeling of 10% or less of total area, or 10 or fewer volatilization marks
C: Peeling of 10% or more of total area, or 11 or more volatilization marks

[Examples 1 to 15, Comparative Examples 1 to 3]

According to the formulations in Tables 1 and 2, the components were mixed to prepare the first agent and the second agent. The prepared first and second agents were added to a dual-barrel cartridge wherein each barrel had a volume of 50 cc, and mixed at room temperature in a volume ratio of 1:1 using a static mixer to give an adhesive. The physical property values of the resulting adhesive were determined, and evaluation tests were also carried out.
The components used in the Examples and Comparative Examples were as follows.

(Epoxy group-containing compounds)

Resorcinol epoxy resin (trade name "EX-201", manufactured by Nagase ChemteX Corporation), molecular weight 222, viscosity (25°C) 250 mPa·s (catalog value), epoxy equivalent 117 g/eq, number of functional groups 2, specific gravity 1.23
Phenyl glycidyl ether (trade name "Denacol EX141", manufactured by Nagase ChemteX Corporation, molecular weight 150, viscosity (25°C) 8 mPa·s (catalog value), epoxy equivalent 151 g/eq, number of functional groups 1, specific gravity 1.11, CAS. No. 122-60-1
Polyfunctional epoxy resin: Bisphenol F epoxy resin (trade name "jER806", manufactured by Mitsubishi Chemical Corporation), molecular weight 330, epoxy equivalent 165 g/eq, number of functional groups 2, viscosity (25°C) 2000 mPa·s

Trimethylolpropane polyglycidyl ether (trade name "EX321", Nagase Chemtex Corporation), molecular weight 280, viscosity (25°C) 130 Pa·s, epoxy equivalent 140 g/eq, number of functional groups 2
p-tert-Butylphenyl glycidyl ether (product name "EX146", Nagase Chemtex Corporation), molecular weight 206, viscosity (25°C) 20 mPa·s, epoxy equivalent 255 g/eq, number of functional groups 1

(Curing agents: Amine)

Trimethylolpropane poly(oxypropylene) triamine (trade name "T-403", manufactured by HUNTSMAN), molecular weight 440, viscosity (25°C) 7.0 Pa·s, active hydrogen equivalent 73.3 g/eq, amine value 291 mg KOH, functional group = 3×($-NH_2$), specific gravity 0.978, CAS. No. 39423-51-3
Poly(oxypropylene)diamine (trade name "D-400", manufactured by HUNTSMAN), molecular weight 430, viscosity 250 mPa·s, active hydrogen equivalent 105 g/eq, number of functional groups 2 ($-NH_2$)×2)
Phenalkamine (trade name "NC-540", manufactured by Cardolite), viscosity 2.5 Pa·s, active hydrogen equivalent 81 g/eq, amine value 490-550 mg KOH, specific gravity 0.99
Metaxylenediamine, molecular weight 136, viscosity (25°C) 6.8 mPa·s, active hydrogen equivalent 34 g/eq, amine value 824 mg KOH, functional group = 2×($-NH_2$), specific gravity 1.05, CAS. No. 1477-55-0
1:1 Reaction product of meta-xylenediamine and styrene (trade name "GASKAMINE 240", manufactured by Mitsubishi Gas Chemical Company, Inc.), molecular weight 240, viscosity (25°C) 6.6 mPa·s, active hydrogen equivalent 80 g/eq, amine value 403 mg KOH, functional groups = 1×($-NH_2$) and 1×(-NH-), specific gravity 1.05
Amidoamine (trade name "PAS 151", manufactured by Ohtake-Meishin Chemical Co., Ltd.), molecular weight 368, viscosity (25°C) 300 mPa·s, active hydrogen equivalent 92 g/eq, amine value 400 mg KOH, functional groups = 1×($-NH_2$) + 2×(-NH), specific gravity 0.95

(Acrylic monomer)

Pentaerythritol alkoxytetraacrylate (trade name "EBECRYL 40", manufactured by Daicel-Allnex Ltd.), molecular weight 571, viscosity 160 mPa·s, acrylic equivalent 145 g/eq, number of functional groups 4
Dipentaerythritol hexaacrylate (trade name "DPHA", manufactured by Daicel-Allnex Ltd.), molecular weight 520, viscosity 6.9 Pa·s, acrylic equivalent 86 g/eq, number of functional groups 6

(Urethane)

Polytetramethylene ether glycol (trade name "PTMG 1000", manufactured by Mitsubishi Chemical Corporation), molecular weight 1000, viscosity 320 mPa·s (40°C)
Hexamethylene diisocyanate (trade name "Duranate TLA 100", manufactured by Asahi Kasei Corporation), molecular weight 100, viscosity 500 mPa·s (25°C)

<Organic polymer having hydrolyzable silyl group>

"MS Polymer SAT350" manufactured by Kaneka Corporation, number average molecular weight 12500, linear type, terminal silylation rate 91%, organic polymer having dimethoxymethylsilyl group at both terminals of polypropylene oxide

(Plasticizer)

Triethylene glycol di(2-ethylhexanoate) 3GO

(Dispersant)

Polymer-based dispersant (acidic group-containing copolymer)

<Additives>

Silanol condensation catalyst: Dibutyltin dilaurate
Water
Dehydrating agent: Vinyltrimethoxysilane
Adhesion promoter: N-(2-Aminoethyl)-3-aminopropyltrimethoxysilane
Dispersant: "DISPERBYK-106" manufactured by BYK-Chemie

(Thermally conductive fillers)

Aluminum hydroxide 1: Amorphous, average particle size 1 μm
Aluminum hydroxide 2: Amorphous, average particle size 10 μm
Aluminum hydroxide 3: Amorphous, average particle size 105 μm
Aluminum hydroxide 4: Amorphous, average particle size 43 μm
Aluminum oxide: Spherical, average particle size 45 μm

[Table 1]

| | | | | Example 1 | | Example 2 | | Example 3 | | Example 4 | | Example 5 | | Example 6 | | Example 7 | | Example 8 | | Example 9 | |
|---|---|---|---|---|---|---|---|---|---|---|---|---|---|---|---|---|---|---|---|---|---|
| | | | | First agent | Second agent | First agent | Second agent | First agent | Second agent | First agent | Second agent | First agent | Second agent | First agent | Second agent | First agent | Second agent | First agent | Second agent | First agent | Second agent |
| Formulation (part by mass) | Epoxy group-containing compound | Resorcinol epoxy resin | | 11.6 | | 11.6 | | 11.6 | | 11.6 | | 11.6 | | 11.6 | | 11.6 | | 11.6 | | 11.6 | |
| | | Phenyl glycidyl ether | | 5.0 | | 5.0 | | 5.0 | | 5.0 | | 5.0 | | 5.0 | | 5.0 | | 5.0 | | 5.0 | |
| | | Bisphenol F epoxy resin | | | | | | | | | | | | | | | | | | | |
| | | Trimethylolpropane polyglycidyl ether | | | | | | | | | | | | | | | | | | | |
| | | p-tert-Butylphenyl glycidyl ether | | | | | | | | | | | | | | | | | | | |
| | Acrylic monomer | Pentaerythritol alkoxytetraacrylate | | | | | | | | | | | | | | | | | | | |
| | | Dipentaerythritol hexaacrylate | | | | | | | | | | | | | | | | | | | |
| | Amine | Trimethylolpropane poly(oxypropylene) triamine | | | 14.7 | | 13.0 | | 11.4 | | 9.8 | | 8.2 | | 13.0 | | 11.4 | | 9.8 | | 8.2 |
| | | Poly(oxypropylene)diamine | | | | | | | | | | | | | | | | | | | |
| | | Phenalkamine | | | | | | | | | | | | | | | | | | | |
| | | Metaxylenediamine | | | 1.6 | | 3.3 | | 4.9 | | 6.5 | | 8.2 | | | | | | | | |
| | | 1:1 Reaction product of meta-xylenediamine and styrene | | | | | | | | | | | | | 3.3 | | 4.9 | | 6.5 | | 8.2 |
| | | Amideamine | | | | | | | | | | | | | | | | | | | |
| | Urethane feedstock | Polytetramethylene ether glycol | | | | | | | | | | | | | | | | | | | |
| | | Hexamethylene diisocyanate | | | | | | | | | | | | | | | | | | | |
| | Organic polymer having hydrolyzable silyl group | | | | | | | | | | | | | | | | | | | | |
| | Additive | Triethylene glycol di(2-ethylhexanoate) | | | | | | | | | | | | | | | | | | | |
| | | BisF | | | | | | | | | | | | | | | | | | | |
| | | Pure water | | | | | | | | | | | | | | | | | | | |
| | | Dibutyltin dilaurate | | | | | | | | | | | | | | | | | | | |
| | | Polymer-based dispersant | | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 |
| | | Vinyltrimethoxysilane | | | | | | | | | | | | | | | | | | | |
| | | N-(2-Aminoethyl)-3-aminopropyltrimethoxysilane | | | | | | | | | | | | | | | | | | | |
| | Thermally conductive filler | Aluminum hydroxide 1 | | 12.9 | 13.0 | 12.9 | 13.0 | 12.9 | 13.0 | 12.9 | 13.0 | 12.9 | 13.0 | 12.9 | 13.0 | 12.9 | 13.0 | 12.9 | 13.0 | 12.9 | 13.0 |
| | | Aluminum hydroxide 2 | | 17.3 | 17.4 | 17.3 | 17.4 | 17.3 | 17.4 | 17.3 | 17.4 | 17.3 | 17.4 | 17.3 | 17.4 | 17.3 | 17.4 | 17.3 | 17.4 | 17.3 | 17.4 |
| | | Aluminum hydroxide 3 | | 34.5 | 34.9 | 34.5 | 34.9 | 34.5 | 34.9 | 34.5 | 34.9 | 34.5 | 34.9 | 34.5 | 34.9 | 34.5 | 34.9 | 34.5 | 34.9 | 34.5 | 34.9 |
| | | Aluminum hydroxide 4 | | 17.3 | 17.4 | 17.3 | 17.4 | 17.3 | 17.4 | 17.3 | 17.4 | 17.3 | 17.4 | 17.3 | 17.4 | 17.3 | 17.4 | 17.3 | 17.4 | 17.3 | 17.4 |
| | | Aluminum oxide | | | | | | | | | | | | | | | | | | | |
| | Total | | | 98.6 | 99.2 | 98.6 | 99.1 | 98.6 | 99.2 | 98.6 | 99.2 | 98.6 | 99.2 | 98.6 | 99.2 | 98.6 | 99.2 | 98.6 | 99.2 | 98.6 | 99.3 |
| Functional group content* | | | mol/g | 0.132 | 0.249 | 0.132 | 0.275 | 0.132 | 0.301 | 0.132 | 0.327 | 0.132 | 0.353 | 0.132 | 0.220 | 0.132 | 0.218 | 0.132 | 0.216 | 0.132 | 0.216 |
| Equivalent ratio* | | | | 1.90 | | 2.10 | | 2.30 | | 2.50 | | 2.69 | | 1.68 | | 1.66 | | 1.65 | | 1.65 | |
| Thermally conductive filler content | | | % by volume | 67.0 | | 67.1 | | 67.1 | | 67.2 | | 67.3 | | 67.0 | | 67.1 | | 67.2 | | 67.2 | |
| Physical property value | Glass transition point of cured product | | °C | 31.8 | | 26.5 | | 33.0 | | 34.1 | | 31.0 | | 39.0 | | 41.0 | | 40.8 | | 41.7 | |
| | Storage elastic modulus E' | -40°C | $\times 10^{10}$ Pa | 1.2 | | 1.4 | | 1.5 | | 1.8 | | 1.7 | | 1.6 | | 1.7 | | 1.6 | | 1.5 | |
| | | 25°C | $\times 10^{9}$ Pa | 0.38 | | 0.38 | | 0.76 | | 2.7 | | 1.2 | | 8.7 | | 7.4 | | 6.9 | | 7.8 | |
| | | 80°C | $\times 10^{8}$ Pa | 0.83 | | 0.61 | | 0.30 | | 0.23 | | 0.059 | | 1.0 | | 0.92 | | 0.65 | | 0.52 | |
| | Mass loss rate | | % | 0.38% | | 0.68% | | 0.94% | | 1.20% | | 1.48% | | 0.34% | | 0.37% | | 0.41% | | 0.41% | |
| | Adhesion test | Adhesive strength | MPa | 3.9 | | 5.24 | | 5.34 | | 3.68 | | 2.02 | | 6.65 | | 6.15 | | 7.24 | | 7.27 | |
| | | Elongation at maximum load | mm | 0.78 | | 0.98 | | 1.02 | | 0.9 | | 0.64 | | 1.3 | | 1.06 | | 0.8 | | 1.2 | |
| | | Fracture mode | G·K | G | | G | | G | | G | | G | | G | | G | | G | | G | |
| | Viscosity | Before mixing first agent and second agent | Pa·s | 74 | 45 | 74 | 35 | 74 | 30 | 74 | 55 | 74 | 35 | 74 | 80 | 74 | 76 | 74 | 83 | 74 | 91 |
| | | After mixing first agent and second agent | Pa·s | 43.1 | | 45.3 | | 49.2 | | 64.7 | | 62.5 | | 54.1 | | 48.5 | | 57.6 | | 58.4 | |
| Evaluation | Thermal cycling test | PV1200 evaluation | Level | A | | A | | A | | A | | A-B | | B | | A-B | | A-B | | B | |
| | | Thermally conducting properties | Thermal conductivity W/m·K | 1.78 | | 1.70 | | 1.66 | | 1.70 | | 1.27 | | 0.80 | | 1.20 | | 1.17 | | 0.96 | |
| | | | Standard deviation W/m·K | 0.08 | | 0.10 | | 0.09 | | 0.10 | | 0.14 | | 0.12 | | 0.16 | | 0.15 | | 0.13 | |
| | | | Judgment | A | | A | | A | | A | | B | | B | | B | | B | | B | |

[Table 2]

| | | | | Example 10 | | Example 11 | | Example 12 | | Example 13 | | Example 14 | | Example 15 | | Comparative Example 1 | | Comparative Example 2 | | Comparative Example 3 | |
|---|---|---|---|---|---|---|---|---|---|---|---|---|---|---|---|---|---|---|---|---|---|
| | | | | First agent | Second agent | First agent | Second agent | First agent | Second agent | First agent | Second agent | First agent | Second agent | First agent | Second agent | First agent | Second agent | First agent | Second agent | First agent | Second agent |
| Formulation (part by mass) | Epoxy group-containing compound | Resorcinol epoxy resin | | 11.6 | | | | | | | | | | | | 11.6 | | 11.6 | | 11.6 | |
| | | Phenyl glycidyl ether | | 5.0 | | | | | | | | | | | | 5.0 | | 5.0 | | 5.0 | |
| | | Bisphenol F epoxy resin | | | | 6.4 | | | | 10.18 | | | | 6.4 | | | | | | | |
| | | Trimethylolpropane polyglycidyl ether | | | | 1.65 | | | | 2.07 | | | | 1.65 | | | | | | | |
| | | p-tert-Butylphenyl glycidyl ether | | | | 3.6 | | | | 3.6 | | | | 3.6 | | | | | | | |
| | Acrylic monomer | Pentaerythritol alkoxytetraacrylate | | | | 4.2 | | | | | | | | 4.2 | | | | | | | |
| | | Dipentaerythritol hexaacrylate | | | | | | | | 4 | | | | | | | | | | | |
| | Amine | Trimethylolpropane poly(oxypropylene) triamine | | | | | 11.7 | | | | 4.6 | | | | 11.7 | | 6.5 | | 14.7 | | 6.5 |
| | | Poly(oxypropylene)diamine | | | | | 1.9 | | | | | | | | 1.9 | | | | | | |
| | | Phenalkamine | | | | | | | | | 13.7 | | | | | | | | | | |
| | | Metaxylenediamine | | | | | | | | | | | | | | | 9.8 | | | | |
| | | 1:1 Reaction product of meta-xylenediamine and styrene | | | | | | | | | | | | | | | | | 1.6 | | 9.8 |
| | | Amideamine | | | 16.3 | | | | | | | | | | | | | | | | |
| | Urethane feedstock | Polytetramethylene ether glycol | | | | | | 13.8 | | | | | | | | | | | | | |
| | | Hexamethylene diisocyanate | | | | | | | 13.8 | | | | | | | | | | | | |
| | Organic polymer having hydrolyzable silyl group | | | | | | | | | | | 4.3 | 4.3 | | | | | | | | |
| | Additive | Triethylene glycol di(2-ethylhexanoate) | | | | | | | | | | 6.7 | 6.7 | | | | | | | | |
| | | BisF | | | | 1.85 | 1.85 | | | | | | | 1.85 | 1.85 | | | | | | |
| | | Pure water | | | | | 1 | | 0.1 | | | | 0.1 | | 1 | | | | | | |
| | | Dibutyltin dilaurate | | | | | | | | | | 0.1 | | | | | | | | | |
| | | Polymer-based dispersant | | 0.1 | 0.1 | 0.2 | 0.2 | 0.1 | | 0.1 | 0.1 | | | 0.2 | 0.2 | 0.1 | 0.1 | 0.1 | 0.1 | 0.1 | 0.1 |
| | | Vinyltrimethoxysilane | | | | | | | | | | 0.2 | | | | | | | | | |
| | | N-(2-Aminoethyl)-3-aminopropyltrimethoxysilane | | | | | | | | | | 0.4 | | | | | | | | | |
| | Thermally conductive filler | Aluminum hydroxide 1 | | 12.9 | 13.0 | 12.9 | 13.4 | 14.0 | 14.0 | 12.5 | 12.7 | 12.9 | 13.4 | 12.9 | 13.4 | 12.9 | 13.0 | 12.9 | 13.0 | 12.9 | 13.0 |
| | | Aluminum hydroxide 2 | | 17.3 | 17.4 | 17.3 | 17.5 | 17.9 | 17.9 | 16.9 | 17.1 | 17.3 | 17.5 | 17.3 | 17.5 | 17.3 | 17.4 | 17.3 | 17.4 | 17.3 | 17.4 |
| | | Aluminum hydroxide 3 | | 34.5 | 34.9 | 34.7 | 35.0 | 36.3 | 36.3 | 33.8 | 34.2 | 34.7 | 35.0 | 34.7 | 35.0 | 34.5 | 34.9 | 34.5 | 34.9 | 34.5 | 34.9 |
| | | Aluminum hydroxide 4 | | 17.3 | 17.4 | 17.3 | 17.5 | 17.9 | 17.9 | 16.9 | 17.1 | 17.3 | 17.5 | | | 17.3 | 17.4 | 17.3 | 17.4 | 17.3 | 17.4 |
| | | Aluminum oxide | | | | | | | | | | | | 17.3 | 17.5 | | | | | | |
| | Total | | | 98.6 | 99.2 | 100.1 | 100.1 | 100.0 | 100.0 | 100.1 | 99.5 | 93.9 | 94.5 | 100.1 | 100.1 | 98.6 | 99.2 | 98.6 | 99.2 | 98.6 | 99.2 |
| Functional group content* | | | mol/g | 0.132 | 0.178 | 0.112 | 0.181 | 0.014 | 0.046 | 0.134 | 0.230 | - | - | 0.112 | 0.181 | 0.132 | 0.379 | 0.132 | 0.222 | 0.132 | 0.212 |
| Equivalent ratio* | | | | 1.36 | | 1.62 | | 3.33 | | 1.72 | | - | | 1.62 | | 2.89 | | 1.69 | | 1.62 | |
| Thermally conductive filler content | | | % by volume | 68.2 | | 68.4 | | 74.50 | | 68.4 | | 76.40 | | 66.4 | | 67.4 | | 67.0 | | 67.4 | |
| Physical property value | Glass transition point of cured product | | °C | 44.4 | | 21.0 | | 46.0 | | 46.0 | | -40.00 | | 21.0 | | 32.0 | | 24.1 | | 49.1 | |
| | Storage elastic modulus E' | -40°C | $\times 10^{10}$Pa | 1.6 | | 1.4 | | 0.4 | | 1.1 | | 0.01 | | 1.4 | | 1.8 | | 1.8 | | 1.5 | |
| | | 25°C | $\times 10^{9}$Pa | 1.0 | | 0.5 | | 0.3 | | 5.3 | | 0.08 | | 0.5 | | 1.2 | | 0.35 | | 7.7 | |
| | | 80°C | $\times 10^{8}$Pa | 0.42 | | 1.10 | | 1.20 | | 1.20 | | 0.12 | | 1.10 | | 0.015 | | 1.3 | | 2.2 | |
| | Mass loss rate | | % | 0.39% | | 0.34% | | 0.12% | | 0.01% | | 0.79% | | 0.34% | | 1.60% | | 0.39% | | 0.28% | |
| | Adhesion test | Adhesive strength | MPa | 6.52 | | 2.13 | | 1.79 | | 1.45 | | 0.81 | | 2.13 | | 0.92 | | 8.51 | | 6 | |
| | | Elongation at maximum load | mm | 0.82 | | 1 | | 0.94 | | 0.52 | | 1.02 | | 1 | | 0.46 | | 1.02 | | 0.74 | |
| | | Fracture mode | G·K | G | | G | | G | | K | | KG | | G | | G | | G | | G | |
| | Viscosity | Before mixing first agent and second agent | Pa·s | 74 | 99 | 90 | 76 | 120 | 120 | 85 | 75 | 80 | 85 | 90 | 76 | 74 | 46 | 74 | 54 | 74 | 109 |
| | | After mixing first agent and second agent | Pa·s | 68.5 | | 83 | | 120 | | 80 | | 83 | | 83 | | 79.1 | | 44.4 | | 46 | |
| Evaluation | Thermal cycling test | PV1200 evaluation | Level | A-B | | A-B | | B | | A | | A | | A-B | | C | | C | | C | |
| | | Thermally conducting properties | Thermal conductivity W/m·K | 1.20 | | 1.19 | | 0.96 | | 1.75 | | 1.77 | | 1.69 | | 0.56 | | 0.57 | | 0.50 | |
| | | | Standard deviation W/m·K | 0.07 | | 0.16 | | 0.13 | | 0.11 | | 0.12 | | 0.16 | | 0.43 | | 0.42 | | 0.34 | |
| | | | Judgment | B | | B | | B | | A | | A | | B | | C | | C | | C | |

*The content of functional group is the number of epoxy groups in the epoxy group-containing compound, the number of acryloyl groups, and the number of active hydrogen atoms of amino groups contained in the amine, per unit amount (g).

*The equivalent ratio is the ratio of the number of active hydrogen atoms of amino groups contained in the amine to the total number of epoxy groups in the epoxy group-containing compound and acryloyl groups in the acrylic monomer in the adhesive obtained by mixing the first agent and the second agent in volume ratio of 1:1.

The adhesives of the above Examples had a mass loss rate after the thermal cycling test of the cured product of 1.5% or less and an elastic modulus at 80°C of the cured product of $1.2 \times 10^8$ Pa or less and, accordingly, did not pose problems in the thermal cycling test and were highly reliable while ensuring low viscosity, high thermal conductivity, and high adhesion. On the other hand, the adhesives of the Comparative Examples had a mass loss rate after the thermal cycling test of the cured product of more than 1.5% or an elastic modulus at 80°C of the cured product of more than $1.2 \times 10^8$ Pa and, accordingly, posed problems in the thermal cycling test and had insufficient reliability.

Reference Signs List

10 Battery module

11, 21 Battery cell
12 Battery module housing (module housing)
13, 23 Gap filler
20 Battery assembly
25 Base member
30 Syringe
31 First syringe
31A Outlet of first syringe
32 Second syringe
32A Outlet of second syringe
33A, 34ABarrel
33B, 34B Barrel lid
35, 45 First agent
36, 46 Second agent
38 Mixer
39 Outlet of mixer
41 First pail can
42 Second pail can
43A, 44AContainer body having opening
43B, 44B Lid for closing opening of container body

**Claims**

1. A curable thermally conductive adhesive comprising a curable binder and a thermally conductive filler, a cured product of the curable thermally conductive adhesive having a mass loss rate of 1.5% or less after a thermal cycling test in which 3 hours at -40°C and 3 hours at 80°C are repeated 20 times, and an elastic modulus at 80°C of $1.2 \times 10^8$ Pa or less.

2. The curable thermally conductive adhesive according to claim 1, wherein the elastic modulus is $3.0 \times 10^6$ Pa or more.

3. The curable thermally conductive adhesive according to claim 1, having a viscosity of 300 Pa·s or less at a shear rate of 3.16 (1/s) at 25°C measured with a rheometer.

4. The curable thermally conductive adhesive according to claim 1, wherein the binder comprises an epoxy group-containing compound.

5. The curable thermally conductive adhesive according to claim 1, wherein the binder comprises at least one of an amine or a thiol.

6. The curable thermally conductive adhesive according to claim 1, wherein the binder comprises an epoxy group-containing compound and an amine.

7. The curable thermally conductive adhesive according to claim 6, wherein an equivalent ratio of the number of active hydrogen atoms of amino groups contained in the amine to the number of epoxy groups of the epoxy group-containing compound [(number of amino groups)/number of epoxy groups] is 1.2 or more and 2.9 or less.

8. The curable thermally conductive adhesive according to claim 1, comprising a first agent which comprises a base resin of the binder and with which a first container is filled, and a second agent which comprises a curing agent that cures by being mixed with the first agent and with which a second container is filled.

9. The curable thermally conductive adhesive according to claim 8, wherein a difference between a viscosity (Pa·s) of the first agent and a viscosity (Pa·s) of the second agent is 150 Pa·s or less.

10. The curable thermally conductive adhesive according to claim 8, wherein a ratio of a functional group concentration (mol/g) of the second agent to a functional group concentration (mol/g) of the first agent is 1.2 or more and 2.9 or less.

11. A container set, which is filled with the curable thermally conductive adhesive according to any one of claims 8 to 10,

and comprises a first container filled with the first agent and a second container filled with the second agent.

**12.** A thermally conductive member comprising a polymer matrix and a thermally conductive filler, and having a mass loss rate of 1.5% or less after a thermal cycling test at - 40°C for 3 hours and at 80°C for 3 hours, and an elastic modulus at 80°C of $1.2 \times 10^8$ Pa or less.

**13.** A thermally conductive member comprising a cured product of the curable thermally conductive adhesive according to claim 1.

**14.** A battery assembly comprising the thermally conductive member according to claim 12 or 13.

Fig. 1

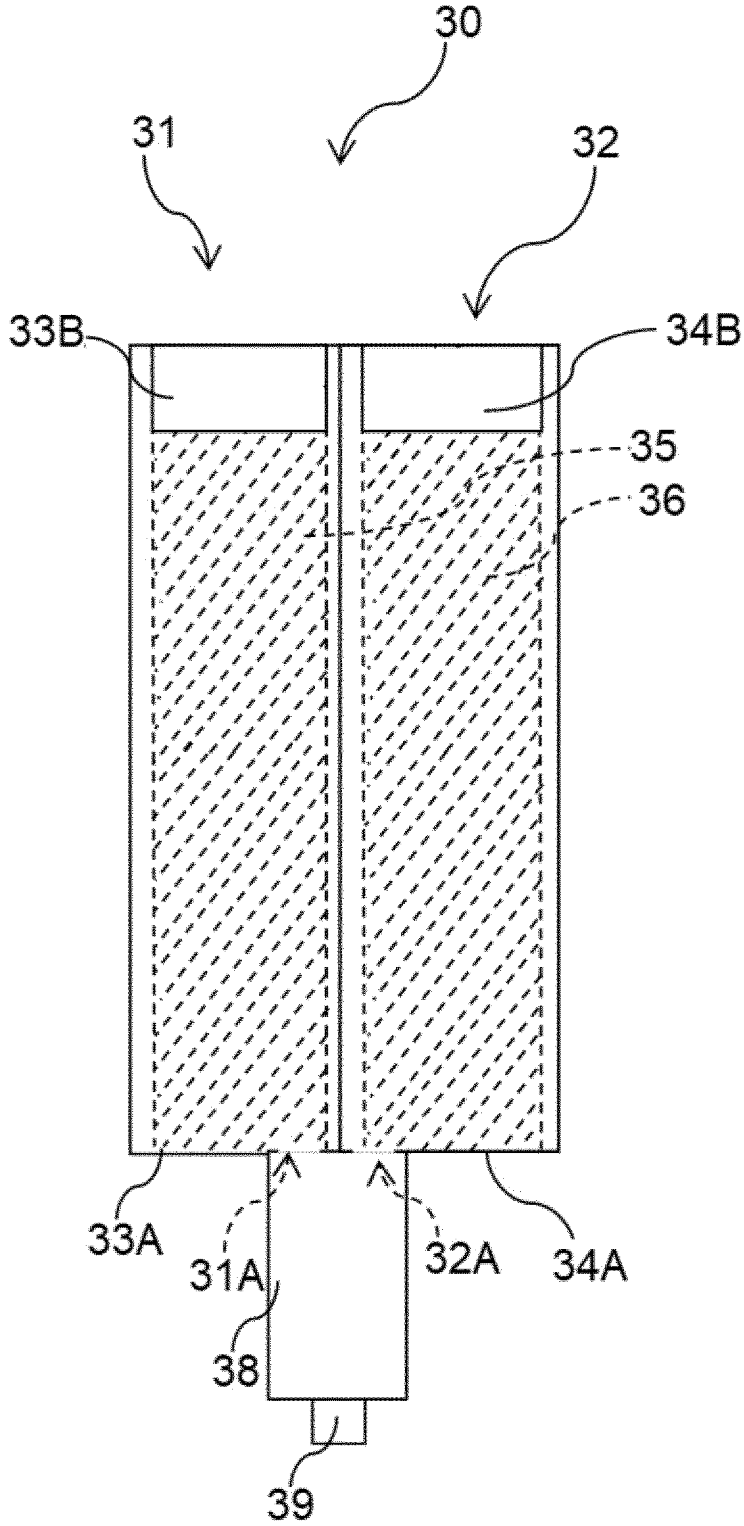

Fig. 2

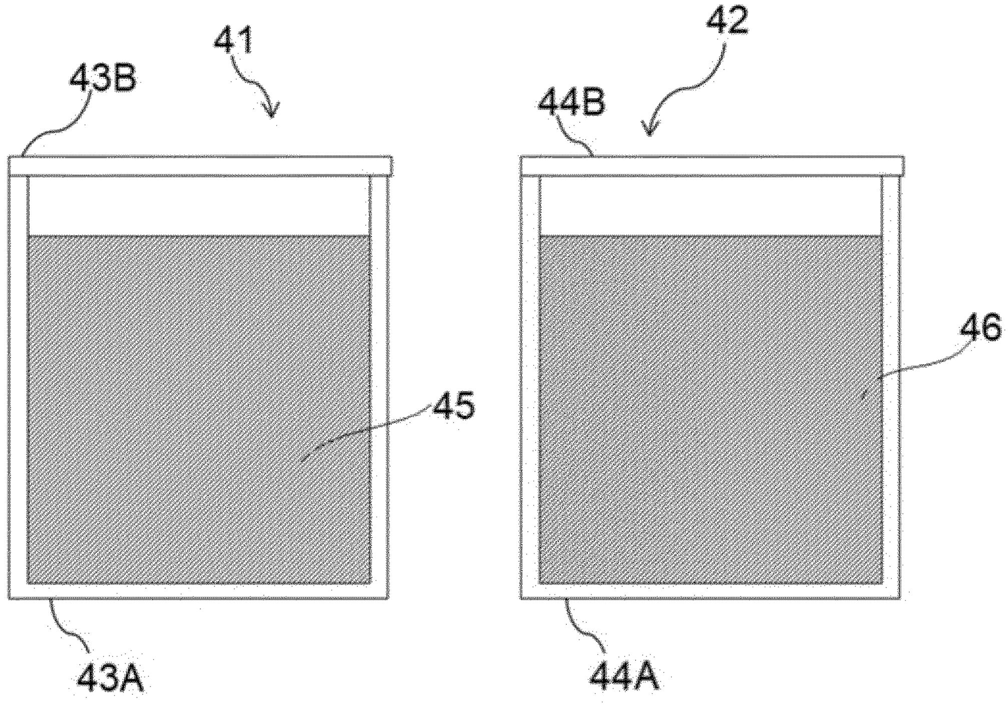


Fig. 3

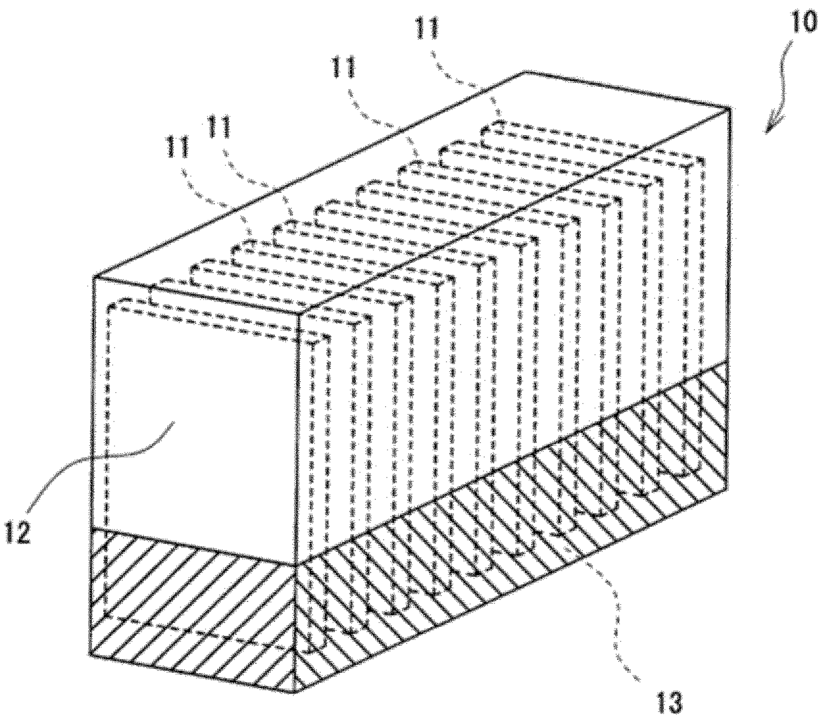

Fig. 4

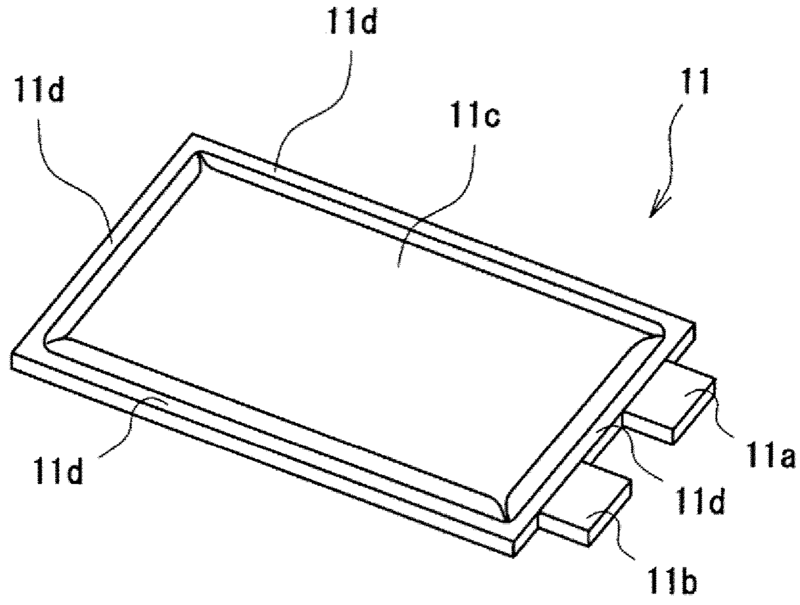


Fig. 5

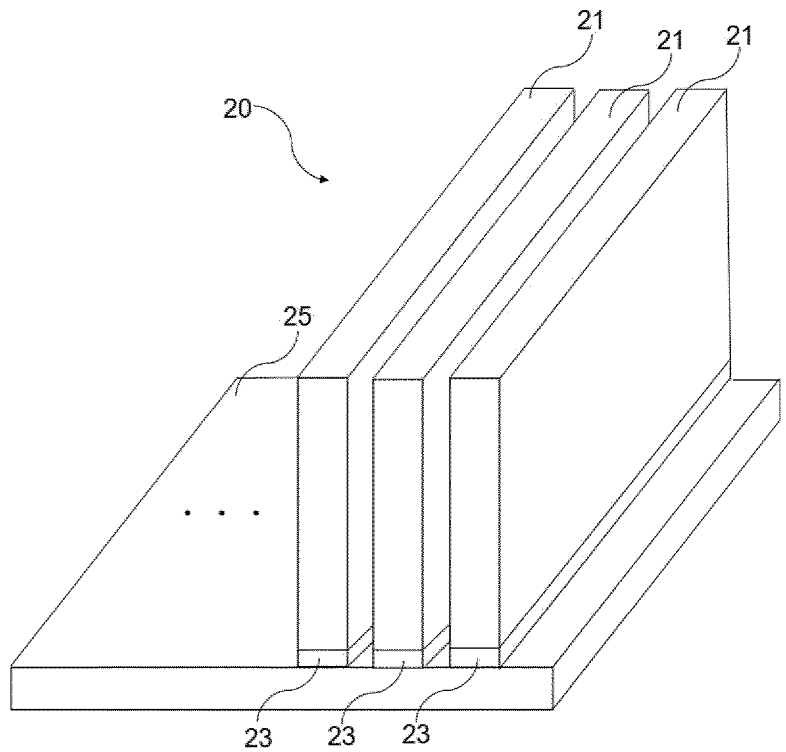

**INTERNATIONAL SEARCH REPORT**

International application No. **PCT/JP2024/003184**

**A. CLASSIFICATION OF SUBJECT MATTER**

***C09J 201/00***(2006.01)i; ***C09J 9/00***(2006.01)i; ***C09J 11/04***(2006.01)i; ***C09J 163/00***(2006.01)i; ***H01M 10/613***(2014.01)i; ***H01M 10/653***(2014.01)i

FI: C09J201/00; C09J9/00; C09J163/00; C09J11/04; H01M10/613; H01M10/653

According to International Patent Classification (IPC) or to both national classification and IPC

**B. FIELDS SEARCHED**

Minimum documentation searched (classification system followed by classification symbols)

C09J201/00; C09J9/00; C09J11/04; C09J163/00; H01M10/613; H01M10/653

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2021/115810 A1 (HENKEL AG & CO. KGAA) 17 June 2021 (2021-06-17) claims, pp. 1, 8, 9, examples | 1-3, 8-14 |
| Y | claims, pp. 1, 8, 9, examples | 14 |
| A | claims, pp. 1, 8, 9, examples | 4-7 |
| X | JP 2013-209575 A (TANAKA KIKINZOKU KOGYO KK) 10 October 2013 (2013-10-10) claims, paragraphs [0044], [0066], examples | 1-4, 8-13 |
| Y | claims, paragraphs [0044], [0066], examples | 14 |
| A | claims, paragraphs [0044], [0066], examples | 5-7 |
| X | JP 2022-151748 A (KITAGAWA IND CO., LTD.) 07 October 2022 (2022-10-07) claims, paragraphs [0016], [0031], [0039], [0055], examples | 1-13 |
| Y | claims, paragraphs [0016], [0031], [0039], [0055], examples | 14 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 March 2024** | **19 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/003184**

**C. DOCUMENTS CONSIDERED TO BE RELEVANT**

| Category* | Citation of document, with indication, where appropriate, of the relevant passages | Relevant to claim No. |
|---|---|---|
| X | JP 2011-153253 A (DENSO CORPORATION) 11 August 2011 (2011-08-11) claims, paragraphs [0010], [0033], [0068]-[0072], examples, fig. 2 | 1-3, 8-13 |
| Y | claims, paragraphs [0010], [0033], [0068]-[0072], examples, fig. 2 | 14 |
| A | claims, paragraphs [0010], [0033], [0068]-[0072], examples, fig. 2 | 4-7 |
| X | US 2007/0289996 A1 (WHEATCRAFT TODD ALAN) 20 December 2007 (2007-12-20) claims, figures | 11 |
| A | JP 2012-174533 A (SEKISUI CHEMICAL CO., LTD.) 10 September 2012 (2012-09-10) entire text, all drawings | 1-14 |

Form PCT/ISA/210 (second sheet) (July 2022)

**INTERNATIONAL SEARCH REPORT**
**Information on patent family members**

International application No.
**PCT/JP2024/003184**

| Patent document cited in search report | Publication date (day/month/year) | Patent family member(s) | Publication date (day/month/year) |
|---|---|---|---|
| WO 2021/115810 A1 | 17 June 2021 | JP 2023-505588 A<br>US 2022/0290020 A1<br>EP 3835332 A1<br>KR 10-2022-0113383 A<br>CN 114846041 A<br>CA 3164186 A | |
| JP 2013-209575 A | 10 October 2013 | (Family: none) | |
| JP 2022-151748 A | 07 October 2022 | (Family: none) | |
| JP 2011-153253 A | 11 August 2011 | US 2011/0180938 A1<br>claims, examples, fig. 2 | |
| US 2007/0289996 A1 | 20 December 2007 | (Family: none) | |
| JP 2012-174533 A | 10 September 2012 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022116587 A


### Non-patent literature cited in the description


- *CHEMICAL ABSTRACTS*, 122-60-1
- *CHEMICAL ABSTRACTS*, 39423-51-3
- *CHEMICAL ABSTRACTS*, 1477-55-0